(19) **Europäisches Patentamt**

**European Patent Office**

**Office européen des brevets**

(11) **EP 1 417 779 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(21) Anmeldenummer: **02754485.7**

(22) Anmeldetag: **01.08.2002**

(51) Int Cl.⁷: **H04B 7/06**, H04B 7/005

(86) Internationale Anmeldenummer:
**PCT/DE2002/002847**

(87) Internationale Veröffentlichungsnummer:
**WO 2003/019815 (06.03.2003 Gazette 2003/10)**

(54) **VERFAHREN ZUM ÜBERTRAGEN EINES GLOBALEN PILOTSIGNALS ZWISCHEN STATIONEN EINES FUNK-KOMMUNIKATIONSYSTEMS UND STATION DAFÜR**

METHOD FOR THE TRANSMISSION OF A GLOBAL PILOT SIGNAL BETWEEN STATIONS OF A RADIO COMMUNICATION SYSTEM AND STATION FOR THE ABOVE

PROCEDE POUR TRANSMETTRE UN SIGNAL PILOTE GLOBAL ENTRE DES STATIONS D'UN SYSTEME DE RADIOCOMMUNICATION ET STATION A CET EFFET

(84) Benannte Vertragsstaaten:
**DE FR GB**

(30) Priorität: **17.08.2001 DE 10140532**

(43) Veröffentlichungstag der Anmeldung:
**12.05.2004 Patentblatt 2004/20**

(73) Patentinhaber: **SIEMENS AKTIENGESELLSCHAFT 80333 München (DE)**

(72) Erfinder:
- **RAAF, Bernhard 81475 München (DE)**
- **LOBINGER, Andreas 83714 Miesbach (DE)**
- **WIEDMANN, Ralf 81369 München (DE)**
- **SEEGER, Alexander 85622 Feldkirchen (DE)**

(56) Entgegenhaltungen:
EP-A- 1 054 519      US-A- 5 966 670
US-A- 6 131 016

**Beschreibung**

Die Erfindung betrifft ein Verfahren zum Übertragen eines globalen Pilotsignals von einer ersten Station eines Funk-Kommunikationsystems an eine zweite Station, wobei die erste Station eine Mehrzahl von Antennen aufweist, denen jeweils eine für sie charakteristische Pilotbitfolge zugeordnet ist, wobei bei dem Verfahren das globale Pilotsignal durch Überlagern der von mehreren Antennen der ersten Station ausgestrahlten Pilotbitfolgen gebildet wird, sowie eine zum Ausstrahlen dieses globalen Pilotsignals geeignete Station.

In einem Mobilfunk-Kommunikationssystem wie etwa dem UMTS-System werden zur Ausnutzung von räumlicher Diversität mehrere Antennen, gegenwärtig zwei Antennen, an einer Basisstation eingesetzt. Dokument EP1054519 stellt ein Mobilfunksystem dar, in dem die Basisstation räumliche Diversität bei der Übertragung zur Mobil station nutzt. Diese werden für die Datenübertragung auf dedizierten Kanälen an einzelne Teilnehmerstationen mit jeweils unterschiedlichen Gewichtungsfaktoren gewichtet. Die Gewichtungsfaktoren sind im allgemeinen komplexe Zahlen, bestehend aus einer Betrags- und einer Phasenkomponente. Ein Satz von gleichzeitig für einen dedizierten Kanal verwendeten Gewichtungsfaktoren wird auch als Gewichtungsvektor bezeichnet. Die Gewichtungsfaktoren werden jeweils so gewählt, dass aus der Gewichtung für jede Teilnehmerstation in einer Zelle eine Abstrahlungskeule in Richtung ihres Aufenthaltsortes resultiert (Beamforming oder Strahlformung).

Bei sogenannten Closed-Loop Transmit Diversity Verfahren teilt die Teilnehmerstation durch Rückkopplungsinformation im Uplink der Basisstation mit, wie sie die Gewichtungsfaktoren festlegen soll, damit an der Teilnehmerstation eine bei gegebener Sendeleistung der Basisstation optimale Empfangsleistung erreicht wird. Um diese Rückkopplungsinformation liefern zu können, muss die Teilnehmerstation über Schätzungen der Dämpfung und Phasenverschiebung auf den Signalausbreitungswegen von den verschiedenen Antennen der Basisstation zur Teilnehmerstation verfügen. Diese Schätzungen werden im UMTS-System herkömmlicherweise anhand eines globalen Pilotsignals gewonnen, das von der Basisstation an alle Teilnehmerstationen in einer Zelle der Basisstation übertragen wird. Das globale Pilotsignal ist eine Überlagerung von Pilotbitfolgen der einzelnen Antennen der Basisstation, wobei die Pilotbitfolgen von Antenne zu Antenne unterschiedlich und jeweils für die sie sendende Antenne charakteristisch sind. Da diese Pilotbitfolgen fest vorgeschrieben und daher der Teilnehmerstation "bekannt" sind, ist die Teilnehmerstation in der Lage, die Pilotbitfolgen aus dem Downlink-Signal zu extrahieren und voneinander zu trennen, um so die Kanaleigenschaften wie Dämpfung und Phasenverschiebung für jede einzelne Antenne zu schätzen.

Um in einer von jeweils einer Basisstation versorgten Funkzelle eines Funk-Kommunikationsystems möglichst viele Teilnehmerstationen gleichzeitig bedienen zu können, ist es wünschenswert, die Abstrahlungsrichtung eines für eine gegebene Teilnehmerstation bestimmten Downlink-Signals möglichst exakt und gebündelt auf diese Teilnehmerstation ausrichten zu können. Dazu wird eine größere Zahl von Antennen an der Basisstation benötigt als die gegenwärtig üblichen zwei.

Wenn die Zahl der Antennen an einer Basisstation vergrößert wird, so führt dies zu dem Problem, dass alle diese Antennen eine für sie charakteristische Pilotbitfolge ausstrahlen müssen, damit die Teilnehmerstationen Kanalschätzungen für diese Antennen durchführen können. Da aber die Pilotbit-Sendeleistung der einzelnen Antennen nicht herabgesetzt werden kann, ohne dass die Qualität der Kanalschätzung bei weit von der Basisstation entfernten Teilnehmerstationen beeinträchtigt wird, muss die Gesamtsendeleistung des globalen Pilotsignals in einem solchen Fall proportional zur Antennenzahl heraufgesetzt werden. Dies jedoch führt zu verstärkter Interferenz und begrenzt wiederum die Zahl der gleichzeitig versorgbaren Teilnehmerstationen.

Aufgabe der vorliegenden Erfindung ist, ein Verfahren zum Übertragen eines globalen Pilotsignals anzugeben, das es erlaubt, alle Teilnehmerstationen, die sich in der Funkzelle einer gegebenen Basisstation befinden, mit einem globalen Pilotsignal zu versorgen, das eine Kanalschätzung in ausreichender Qualität erlaubt, ohne dass hierfür die Sendeleistung des globalen Pilotsignals proportional zur Antennenzahl vergrößert werden muss.

Die Aufgabe wird dadurch gelöst, dass die mehreren Antennen der Basisstation in eine erste Gruppe und eine zweite Gruppe mit jeweils wenigstens einer Antenne aufgeteilt werden, dass zu einer gegebenen Zeit nur diejenigen Pilotbitfolgen gesendet werden, die zu Antennen der ersten Gruppe gehören, und dass die Zusammensetzungen der ersten und der zweiten Gruppe von Zeit zu Zeit geändert werden.

Dies erlaubt es, jede Pilotbitfolge mit der Leistung zu senden, die erforderlich ist, damit eine Kanalschätzung für diese Pilotbitfolge im ganzen Gebiet der Funkzelle der Basisstation durchgeführt werden kann, da aber nie alle Antennen gleichzeitig ihre Pilotbitfolge senden, bleibt die Leistung des globalen Pilotsignals kleiner als das n-fache der Sendeleistungen der Pilotbitfolgen, wobei n die Zahl der Antennen ist. Zwar steht nicht zu jedem Zeitpunkt jedes Pilotbitsignal für Messungen zur Verfügung, durch eine geeignete Steuerung der Zusammensetzung der zwei Gruppen bzw. ausreichend häufiges Ändern der Zusammensetzung kann sichergestellt werden, dass für alle Antennen eine hinreichend aktuelle Kanalschätzung möglich ist.

Vorzugsweise wiederholen sich die Zusammensetzungen der Gruppen zyklisch. Dies ermöglicht es den Teilnehmerstationen, aus ihrer "Kenntnis" des vorgeschriebenen Zyklus vorab zu "wissen", aus welchen Pilotbitfolgen der einzelnen Antennen sich das globale Pilotsignal zu einem gegebenen Zeitpunkt zusammensetzt, ohne dass ein Versuch unternommen werden muss, eine dieser Pilotbitfolgen im empfangenen globalen Pilotsignal zu identifizieren.

In einer einfachen Ausgestaltung des Verfahrens ist vorgesehen, dass in jedem Zyklus jede Antenne wenigstens einmal der zweiten Gruppe angehört, d.h. wenigstens einmal für eine vorgegebene Zeitspanne ihre Pilotbitfolge nicht sendet. Diese Gleichbehandlung aller Antennen ermöglicht eine einfache Steuerung.

Einer bevorzugten Ausgestaltung zufolge gehören zwei Antennen ständig der ersten Gruppe an. Diese Ausgestaltung hat den Vorteil, sich als Weiterentwicklung der existierenden UMTS-Norm zu eignen. Diese sieht nämlich vor, dass das globale Pilotsignal ständig die Pilotbitfolgen der bislang vorgesehenen zwei Antennen enthält, und Teilnehmerstationen, die für diese Norm konstruiert sind, benötigen die ständige Präsenz der Pilotbitfolgen dieser zwei Antennen im globalen Pilotsignal, um korrekt zu arbeiten.

Eine dritte und eine vierte Antenne der Basisstation (oder gegebenenfalls weitere Antennen) gehören jeweils alternierend der ersten bzw. der zweiten Gruppe an, d.h. ihre Pilotbitfolgen werden nicht ständig gesendet.

Wenn die Basisstation insgesamt vier Antennen aufweist, so werden die dritte und die vierte Antenne vorzugsweise jeweils abwechselnd der ersten bzw. der zweiten Gruppe zugeordnet. D.h. in einem ersten Zeitraum setzt sich das globale Pilot signal aus den Pilotbitfolgen der ersten, zweiten und dritten Antenne, in einem zweiten Zeitraum aus denen der ersten, zweiten und vierten Antenne und in einem dritten wiederum aus denen der ersten, zweiten und dritten Antenne zusammen.

Die Zeitpunkte, an denen die Zusammensetzung der zwei Gruppen geändert wird, richten sich zweckmäßigerweise nach der zeitlichen Struktur des Sendesignals der Basisstation. Im UMTS-System und vielen anderen Mobilfunk-Kommunikationssystemen ist dieses Sendesignal in Rahmen und die Rahmen wiederum in eine Mehrzahl von Zeitschlitzen unterteilt.

Einer ersten bevorzugten Ausgestaltung zufolge wird die Zusammensetzung der zwei Gruppen jeweils an einer Grenze zwischen zwei Zeitschlitzen durchgeführt. Diese Änderung kann an jeder Grenze zwischen zwei Zeitschlitzen stattfinden. Dies hat bei einem System mit fünfzehn Zeitschlitzen pro Rahmen und vier Antennen, von denen die erste und die zweite ständig und die dritte und die vierte jeweils abwechselnd der ersten Gruppe angehören, die Folge, dass die Zusammensetzung des globalen Pilotsignals in Zeitschlitzen mit gleicher laufender Nummer ab dem Beginn eines Rahmens für aufeinanderfolgende Rahmen unterschiedlich ist und sich erst von einem Rahmen zum übernächsten wiederholt.

Es kann auch vorgesehen werden, dass der Zyklus, in dem sich die verschiedenen Zusammensetzungen des globalen Pilotsignals wiederholen, jeweils ein Rahmen ist. Dies vereinfacht die Auswertung des globalen Pilotsignals durch die Teilnehmerstation, da diese für eine korrekte Zuordnung der Kanalschätzungen zu den einzelnen Antennen der Basisstation keine laufende Nummer des aktuellen Rahmens berücksichtigen muss.

Im oben betrachteten Spezialfall eines Systems mit vier Antennen, von denen die erste und zweite ständig und die dritte und vierte jeweils abwechselnd der ersten Gruppe angehören, kann dies realisiert werden, in dem die Zusammensetzung der ersten Gruppe jeweils zwischen zwei Zeitschlitzen eines gleichen Rahmens verändert wird und von einem letzten Zeitschlitz eines Rahmens zum ersten Zeitschlitz des nachfolgenden unverändert bleibt.

Eine andere Möglichkeit bei einem solchen System mit vier Antennen ist, dass in einem ersten Zeitschlitz die erste, zweite und dritte Antenne der ersten Gruppe angehören, in einem darauffolgenden zweiten Zeitschlitz die erste, zweite und vierte Antenne und in einem darauffolgenden dritten Zeitschlitz nur die erste und zweite Antenne. Dieser Zyklus von drei Zeitschlitzen kann in einem Rahmen von fünfzehn Zeitschlitzen 5mal wiederholt werden, und die Abfolge der Zusammensetzungen ist von Rahmen zu Rahmen die gleiche.

Während eine jeweils mit Zeitschlitzgrenzen verknüpfte Änderung der Zusammensetzung der Gruppen sowohl in auf Codemultiplex wie auch auf Zeitmultiplex basierenden Funk-Kommunikationsystemen anwendbar ist, eignen sich Codemultiplexsysteme wie das UMTS-System auch für eine nicht an Zeitschlitzgrenzen gekoppelte Änderung der Gruppenzusammensetzung. Codemultiplexsysteme ermöglichen nämlich, das globale Pilotsignal zeitkontinuierlich auszustrahlen, so dass eine Kanalschätzung zu jedem beliebigen Zeitpunkt möglich ist, wenn sie von der Teilnehmerstation benötigt wird. Die Änderung der Zusammensetzung kann daher auch in Zeitabständen von jeweils dem M/mfachen der Dauer eines Zeitschlitzes stattfinden, wobei m eine natürliche Zahl, vorzugsweise 2M, M oder 2M/3 ist und M die Zahl der Zeitschlitze eines Rahmens, im Falle des UMTS-Systems 15, ist.

Das oben beschriebene Verfahren ist zweckmäßig anwendbar zum Übertragen eines globalen Pilotsignals im Rahmen eines Closed Loop Transmit Diversity Verfahrens, bei dem zur Strahlformung eines von der Basisstation an eine Teilnehmerstation gesendeten Signals die Basisstation einen für die Strahlformung verwendeten Gewichtungsfaktor für jede Antenne anhand von von der Teilnehmerstation gelieferter Rückkopplungsinformation festlegt. Zu diesem Zweck werden die folgenden Schritte periodisch wiederholt:

- Durchführen einer Kanalschätzung für jeweils wenigstens eine aktuelle in dem globalen Pilotsignal enthaltene Pilotbitfolge durch die zweite Station,

- Ableiten von auf die so abgeschätzte Pilotbitfolge bezogener Rückkopplungsinformation von der Kanalschätzung und Übertragen der Rückkopplungsinformation an die erste Station,

- Aktualisieren eines der abgeschätzten Pilotbitfolge zugeordneten Gewichtungsfaktors anhand der Rückkopplungsinformation.

Um eine möglichst zeitnahe Strahlformung zu erreichen, werden die Schritte des Ableitens der Rückkopplungsinformation und des Aktualisierens des Gewichtungsfaktors jeweils in einem festen Zeitabstand durchgeführt, und in jedem Aktualisierungsschritt wird jeweils derjenige Gewichtungsfaktor aktualisiert, zu dem im unmittelbar zuvor durchgeführten Ableitungsschritt Rückkopplungsinformation abgeleitet und übertragen worden ist.

Um die Menge an zu übertragender Rückkopplungsinformation klein zu halten, kann eine Antenne der Basisstation ausgewählt werden, deren zugeordneter Gewichtungsfaktor als ein konstanter Referenzfaktor angenommen wird; in diesem Fall kann die wenigstens eine Kanalschätzung jeweils an einer Pilotbitfolge einer anderen Antenne vorgenommen werden und von dieser Kanalschätzung abgeleitete Rückkopplungsinformation an die Basisstation übertragen werden. In diesem Fall genügt für eine vollständige Aktualisierung der Gewichtungsfaktoren an einer Basisstation mit n Antennen die (n-1)-malige Übertragung von Rückkopplungsinformation.

Die Einsparung an übertragener Rückkopplungsinformation, die auf diese Weise erzielt wird, ist proportional um so geringer, je größer die Zahl n der Antennen ist. Hinzu kommt, dass, wenn sich die Phasenverschiebung auf dem als Referenz angenommenen Kanal der ersten Antenne verändert und auf den Kanälen der anderen Antennen gleich bleibt, eine Anpassung der Gesamtheit der von der Basisstation verwendeten Gewichtungsfaktoren an diese Veränderung nur möglich ist, indem die Phasen sämtlicher anderen Gewichtungsfaktoren geändert werden. D.h. die Anpassung erfordert die (n-1)-malige Übertragung von Rückkopplungsinformation und ist daher recht träge. Um diese Nachteile zu vermeiden, wird ein Verfahren vorgeschlagen, bei dem ein gleitender Mittelwert der Gewichtungsfaktoren als Referenzfaktor berechnet wird, die Kanalschätzungen an den Pilotbitfolgen aller Antennen vorgenommen werden und die Rückkopplungsinformation jeweils wenigstens eine von der Phasenlage der geschätzten Pilotbitfolge in Bezug zum Referenzfaktor abhängige Phaseninformation umfasst. Dieses Verfahren erlaubt die Anpassung des Gewichtungsfaktors jeder einzelnen Antenne mit der gleichen Geschwindigkeit.

Zur Berechnung des gleitenden Mittelwerts für die Pilotbitfolge der j-ten Antenne wird vorzugsweise eine Summe der Form

$$\sum_i w_i h_i$$

gebildet, wobei $w_i$ ein Gewichtungsfaktor und $h_i$ eine Kanalschätzung der Pilotbitfolge der i-ten Antenne sind und $i \neq j$ ist. Diese Summe kann über alle Antennen der ersten Station mit Ausnahme der j-ten Antenne gebildet werden; in diesem Fall müssen wenigstens für diejenigen Antennen i, die zum Zeitpunkt der Mittelwertberechnung der zweiten Gruppe angehören, zu einem früheren Zeitpunkt gewonnene Kanalschätzungen $h_i$ verwendet werden. Eine andere Möglichkeit ist, diese Summation auf alle Antennen der ersten Gruppe mit Ausnahme der j-ten zu erstrecken; in diesem Fall stehen alle Pilotbitfolgen, deren Kanalschätzung in den Mittelwert eingeht, zum Zeitpunkt der Berechnung zur Verfügung, so dass aktuelle Schätzungen auch für diese Pilotbitfolgen verwendet werden können.

Zusätzlich zur Phaseninformation kann die Rückkopplungsinformation auch eine von der Empfangsfeldstärke der geschätzten Pilotbitfolge abhängige Feldstärkeinformation umfassen, um so nicht nur die Phase, mit der eine bestimmte Antenne sendet, sondern auch deren Leistung zu steuern.

Weitere Merkmale und Vorteile der Erfindung ergeben sich aus der nachfolgenden Beschreibung von Ausführungsbeispielen mit Bezug auf die beigefügten Figuren. Es zeigen:

Fig. 1 ein Blockdiagramm eines Funk-Kommunikationsystems, in dem die vorliegende Erfindung anwendbar ist;

Fig. 2 ein Blockdiagramm der Senderstufe einer Basisstation des Funk-Kommunikationsystems aus Fig. 1;

Fig. 3 und 3A jeweils ein Zeitablaufdiagramm, das den zeitlichen Zusammenhang zwischen den einzelnen Pilotbitfolgen des globalen Pilotsignals, einem DownlinkDatenkanal und einem Uplink-Datenkanal zeigt; und

Figs. 4 bis 8 Beispiele für die im Laufe der Zeit wechselnde Zusammensetzung des globalen Pilotsignals gemäß verschiedenen Ausgestaltungen der Erfindung.

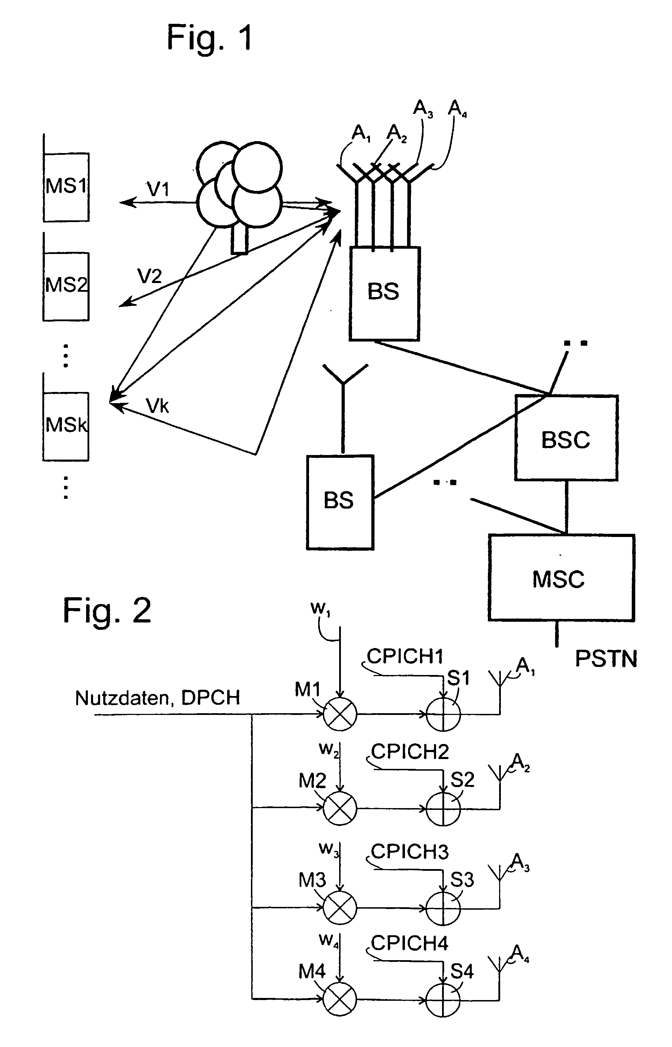

Fig. 1 zeigt die Struktur eines Funk-Kommunikationsystems, in dem die vorliegende Erfindung anwendbar ist. Es besteht aus einer Vielzahl von Mobilvermittlungsstellen MSC, die untereinander vernetzt sind bzw. Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstation MS aufbauen. Sie ist mit einer Antenneneinrichtung ausgerüstet, die mehrere Antennen, hier vier Antennen $A_1$, $A_2$, $A_3$, $A_4$ umfasst. Diese Antennen $A_1$ bis $A_4$ werden von der Basisstation BS mit einem Downlink-Signal beaufschlagt, das sich aus einer Vielzahl von Komponenten zusammensetzt. Eine dieser Komponenten ist ein globales Pilotsignal CPICH (Common Pilot Channel), das sich aus einer Mehrzahl von Pilotbitfolgen CPICH1, CPICH2, CPICH3 und CPICH4 der Antennen $A_1$ bis $A_4$ zusammensetzt; eine andere Gruppe von Komponenten sind dedizierte Datenkanäle DPCH (Dedicated Physical Channel), auf denen jeweils für eine Teilnehmerstation MS bestimmte Nutzdaten übertragen werden.

Fig. 2 zeigt schematisch die Senderstufe der Basisstation BS aus Fig. 1. Wie diese Fig. zeigt, werden die Symbole des Nutzdatenkanals DPCH in der Senderstufe jeweils in Multiplizierern M1 bis M4 mit komplexen Gewichtungsfaktoren $w_1$, $w_2$, $w_3$, $w_4$ multipliziert; auf diese Weise wird dem von den Antennen ausgestrahlten Nutzdatenkanal eine Phasenverschiebung und ein Amplitudenverhältnis aufgeprägt, das zu einer gerichteten Ausbreitung des Datenkanals DPCH auf dem Funkweg führt.

Das Ausgangssignal der Multiplizierer M1, M2, M3, M4 durchläuft jeweils einen Addierer S1, S2, S3, S4, über den die Pilotbitfolge CPICH1, CPICH2, CPICH3, CPICH4 des globalen Pilotsignals CPICH den Antennen $A_1$ bis $A_4$ zugeführt werden können. Die Pilotbitfolgen CPICH1 bis CPICH4 sind zueinander orthogonal und breitet sich in der Funkzelle ungerichtet aus. Da sie für alle Teilnehmerstationen in der Funkzelle empfangbar sein sollen, werden sie mit einer festen Leistung ausgestrahlt, die im allgemeinen höher ist als die des Nutzdatenkanals.

Die Pilotbitfolgen sind zueinander orthogonal und jeweils charakteristisch für eine Antenne, der sie zugeordnet sind. Die Orthogonalität erlaubt es den Teilnehmerstationen MS1, MS2, ..., MSk ..., die Anteile der verschiedenen Pilotbitfolgen in einem Empfangssignal zu separieren und für jede dieser Folgen, d.h. für jede der Antennen $A_1$ bis $A_4$, getrennt eine Kanalschätzung durchzuführen. Die Art und Weise, in der eine solche Schätzung durchgeführt wird, ist bekannt und braucht hier nicht im Detail erläutert zu werden. Sie gibt Aufschluss über Dämpfung und Phasenverschiebung auf dem Übertragungskanal von der zugeordneten Antenne zur Teilnehmerstation.

Die Besonderheit der Basisstation BS ist, dass nicht alle Pilotbitfolgen gleichzeitig zum Sendesignal hinzugefügt werden. Stattdessen nimmt die Basisstation BS zyklisch eine Aufteilung der Antennen bzw. der ihnen zugeordneten Pilotbitfolgen in eine erste und eine zweite Gruppe vor, und fügt nur die Pilotbitfolgen der ersten Gruppe zum Sendesignal hinzu. Ausführungsbeispiele hierfür werden im folgenden erläutert.

**Ausführungsbeispiel 1**

Das Sendesignal der Basisstation ist in Rahmen unterteilt, die ihrerseits in je fünfzehn Zeitschlitze unterteilt sind. Die Zusammensetzung der ersten und zweiten Gruppe wird jeweils von einem Zeitschlitz zum darauffolgenden geändert; die Zugehörigkeit einer Pilotbitfolge zur ersten oder zweiten Gruppe ist in der nachfolgenden Tabelle 1 angegeben.

Tabelle 1

| Zeitschlitz | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Feedback zu | $\underline{w}_4$ | $\underline{w}_1$ | $\underline{w}_2$ | $\underline{w}_3$ | $\underline{w}_4$ | $\underline{w}_1$ | $\underline{w}_2$ | $\underline{w}_3$ | $\underline{w}_4$ | $\underline{w}_1$ | $\underline{w}_2$ | $\underline{w}_3$ | $\underline{w}_4$ | $\underline{w}_1$ | $\underline{w}_2$ |
| CPICH1 | X | | | | X | | | | X | | | | X | | |
| CPICH2 | | X | | | | X | | | | X | | | | X | |
| CPICH3 | | | X | | | | X | | | | X | | | | X |
| CPICH4 | | | | X | | | | X | | | | X | | | |

Dabei gibt ein x an der Kreuzung der einer Pilotbitfolge entsprechenden Zeile mit einer einem Zeitschlitz entsprechenden Spalte an, dass die Pilotbitfolge in diesem Zeitschlitz zur ersten Gruppe gehört, während ein leeres Kästchen die Zugehörigkeit der Pilotbitfolge zur zweiten Gruppe angibt. Wie man sieht, enthält das globale Pilotsignal in jedem Zeitschlitz nur jeweils eine Pilotbitfolge, wobei sich die einzelnen Pilotbitfolgen CPICH1 bis CPICH4 in den Zeitschlitzen 0 bis 14 zyklisch abwechseln.

Es könnte alternativ vorgesehen werden, dass der zyklische Wechsel auch übergreifend von einem Rahmen zum nächsten stattfindet, in einem solchen Falle würde sich auf den Zeitschlitz 14 der hier dargestellten Tabelle ein Zeitschlitz 0 eines Folgerahmens anschließen, in dem das globale Pilotsignal nur aus CPICH4 besteht.

Bevorzugt ist allerdings, dass sich die Reihenfolge der Zusammensetzungen der ersten und zweiten Gruppe in aufeinanderfolgenden Rahmen jeweils identisch wiederholt. Dies ermöglicht es einer Teilnehmerstation, allein anhand der Nummer eines Zeitschlitzes, ohne Rücksicht auf die Nummer des Rahmens, zu entscheiden, welche Pilotbitfolge (oder -folgen) im globalen Pilotsignal enthalten sind.

Die Teilnehmerstation gewinnt in jedem Zeitschlitz eine Kanalschätzung $h_j$ für die in diesem Zeitschlitz übertragene Pilotbitfolge CPICHj. Aus früheren Zeitschlitzen sind Kanalschätzungen $h_i$, $i \neq j$ für andere Pilotbitfolgen sowie von der Teilnehmerstation für diese Pilotbitfolgen ausgewählte Gewichtungsfaktoren $w_i$ bekannt. Die Teilnehmerstation wählt nun für die geschätzte Pilotbitfolge CPICHj einen Gewichtungsfaktor $w_j$ so aus, dass die Phase des Produktes von $w_j h_j$ gleich der Phase von

$$\sum_{\substack{i \\ i \neq j}} w_i h_i$$

ist, und dass die Quadratsumme der Gewichtungsfaktoren aller Antennen

$$\sum_{i=1}^{n} \left| w_i^2 \right|$$

gleich 1 bleibt. Die Gewichtungsfaktoren werden nach der Formel

$$w_j = h_j^* \cdot \frac{\sum_{i \neq j} w_i h_i}{(n-1)\left|h_j\right|^2} \qquad (1)$$

berechnet. Dabei bezeichnet $h_j^*$ die zu $h_j$ konjugiert komplexe Zahl. Der so erhaltene Gewichtungsfaktor $w_j$ wird im darauffolgenden Zeitschlitz als Rückkopplungsinformation an die Basisstation übertragen.

Die nach Formel (1) berechneten Gewichtungsfaktoren haben sowohl variablen Betrag als auch variable Phase. Zur Vereinfachung, insbesondere um die zu übertragende Menge an Rückkopplungsinformation zu reduzieren, kann der Betrag aller Gewichtungsfaktoren als konstant und nur die Phase als variabel angenommen werden. Bei dieser Variante werden die Gewichtungsfaktoren nach der Formel

$$e^{\hat{j}\phi_j} = K h_j^* \sum_{i \neq j} e^{\hat{j}\phi_i} h_i , \qquad (2)$$

berechnet, wobei $\hat{j}$ die imaginäre Zahl ist, $K$ ein Normierungsfaktor ist und $\phi_i$, $\phi_j$, jeweils die Phase von $w_i$ bzw. $w_j$ bezeichnet.

Die Basisstation BS aktualisiert einmal in jedem Zeitschlitz den von ihr für die Strahlformung verwendeten Satz von Gewichtungsfaktoren.

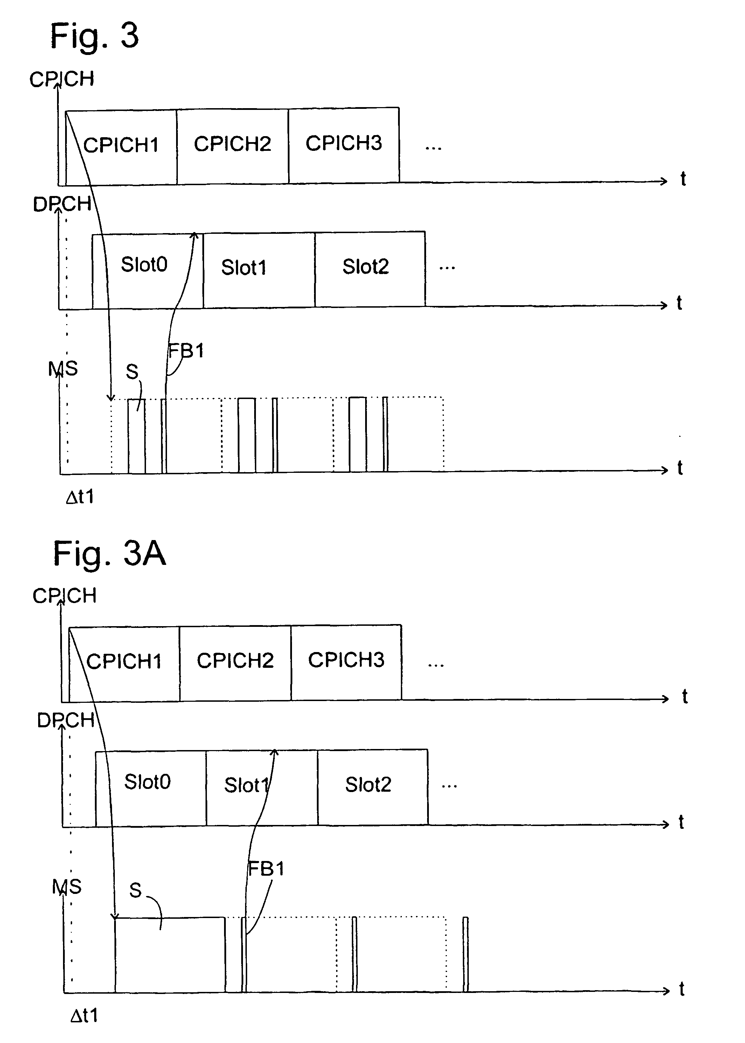

Fig. 3 zeigt den Ablauf dieser Vorgänge im Verlauf von drei Zeitschlitzen im Detail. Die in einem ersten Zeitschlitz des globalen Pilotsignals CPICH ausgestrahlte Pilotbitfolge CPICH1 erreicht die Teilnehmerstation MS nach einer Laufzeit $\Delta$t1. Während die Pilotbitfolge CPICH1 an der Teilnehmerstation MS verfügbar ist, führt diese eine Kanalschätzung S aus, verarbeitet diese und überträgt die daraus ermittelte Rückkopplungsinformation FB1 zurück an die Basisstation BS. Dort trifft die Rückkopplungsinformation FB1 kurz vor Beginn eines Zeitschlitzes Slotl des Downlink-Signals ein. Die Basisstation aktualisiert anhand der Rückkopplungsinformation FB1 den Gewichtungsfaktor $w_1$, der der Antenne $A_1$ zugeordnet ist, die CPICH1 gesendet hat. Der Zeitschlitz Slotl des Downlink-Signals wird mit dem aktualisierten Satz von Gewichtungsvektoren gesendet. Entsprechendes wiederholt sich in den folgenden Zeitschlitzen für die Antennen $A_2$, $A_3$ und ihre Pilotbitfolgen CPICH2, CPICH3.

Wie Fig. 3A zeigt, kann die Kanalschätzung S auch die gesamte Zeitspanne einnehmen, in der die Teilnehmerstation MS die Pilotbitfolge CPICH1 empfängt. Die verlängerte Dauer der Schätzung erlaubt eine höhere Genauigkeit, allerdings steht die Rückkopplungsinformation FB1 auch erst später zur Verfügung als beim Beispiel von Fig. 3. Sie erreicht die Basisstation BS erst im Laufe des Zeitschlitzes Slotl und kann daher erst für die Strahlformung im Zeitschlitz Slot2 berücksichtigt werden.

Die mit "Feedback zu" bezeichnete Zeile in Tabelle 1 gibt für jeden Zeitschlitz an, zu welchem Gewichtungsfaktor die Teilnehmerstation in diesem Zeitschlitz Rückkopplungsinformation liefert. Es ist hier stets derjenige Gewichtungsfaktor, dessen Pilotbitfolge im vorhergehenden Zeitschlitz das globale Pilotsignal gebildet hat.

### Ausführungsbeispiel 2

Beim Ausführungsbeispiel 1 enthält das globale Pilotsignal CPICH1 zu jenem Zeitpunkt nur eine einzige Pilotbitfolge. Dies ist weniger, als nach dem gegenwärtigen Standard für das UMTS-System mit zwei Antennen vorgesehen ist, wo das globale Pilotsignal jeweils die Pilotbitfolgen beider Antennen enthält. Das globale Pilotsignal könnte beim erfindungsgemäßen Verfahren also auch zwei Pilotbitfolgen enthalten, ohne dass dies im Vergleich zum geltenden UMTS-Standard eine Heraufsetzung der Sendeleistung des globalen Pilotsignals erfordert. Nach dem zweiten Ausführungsbeispiel des erfindungsgemäßen Verfahrens werden daher die Pilotbitfolge CPICH1 bis CPICH4 gemäß folgender Tabelle 2 der ersten und zweiten Gruppe zugeordnet.

Tabelle 2

| Zeitschlitz | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Feedback zu | $w_4$ | $w_1$ | $w_2$ | $w_3$ | $w_4$ | $w_1$ | $w_2$ | $w_3$ | $w_4$ | $w_1$ | $w_2$ | $w_3$ | $w_4$ | $w_1$ | $w_2$ |
| CPICH1 | X | | X | | X | | X | | X | | X | | X | | X |
| CPICH2 | | X | | X | | X | | X | | X | | X | | X | |
| CPICH3 | X | | X | | X | | X | | X | | X | | X | | X |
| CPICH4 | | X | | X | | X | | X | | X | | X | | X | |

Dies erlaubt es z.B. im Zeitschlitz 0, nicht nur wie gemäß Tabelle 1 eine Kanalschätzung für CPICH1 durchzuführen, sondern gleichzeitig auch für CPICH3, und so den Gewichtungsfaktor $w_1$ anhand einer im gleichen Zeitschlitz vorgenommenen Kanalschätzung $h_3$ für CPICH3 zu bestimmen, während beim Verfahren nach Tabelle 1 der Bestimmung eines Gewichtungsfaktors z.T. Kanalschätzungen zugrundegelegt werden müssen, die mehrere Zeitschlitze alt sind.

### Ausführungsbeispiel 3

Wie bereits erwähnt, sieht die geltende UMTS-Norm Basisstationen mit zwei Antennen vor. In jedem Zeitschlitz des globalen Pilotsignals werden die Pilotbitfolgen dieser beiden Antennen übertragen. Um eine Kompatibilität des erfindungsgemäßen Verfahrens mit der UMTS-Norm zu gewährleisten, ist es daher erforderlich, dass auch hier die Pilotbitfolgen zweier Antennen, hier die Pilotbitfolgen CPICH1, CPICH2 der Antennen $A_1$, $A_2$, ständig im globalen Pilotsignal enthalten sind; mit anderen Worten müssen diese zwei Pilotbitfolgen ständig in der ersten Gruppe enthalten sein. Die Pilotbitfolgen der dritten und vierten Antenne $A_3$, $A_4$ werden lediglich zeitschlitzweise hinzugeschaltet, wie die nachfolgende Tabelle 3 zeigt.

Tabelle 3

| Slot | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Feedback zu | $w_2$ | $w_3$ | $w_4$ | $w_2$ | $w_3$ | $w_4$ | $w_2$ | $w_3$ | $w_4$ | $w_2$ | $w_3$ | $w_4$ | $w_2$ | $w_3$ | $w_4$ |
| CPICH1 | X | X | X | X | X | X | X | X | X | X | X | X | X | X | X |
| CPICH2 | X | X | X | X | X | X | X | X | X | X | X | X | X | X | X |
| CPICH3 | X | | | X | | | X | | | X | | | X | | |
| CPICH4 | | X | | | X | | | X | | | X | | | X | |

Die Zusammensetzungen der ersten und zweiten Gruppe wiederholen sich jeweils mit einer Periode von drei Zeitschlitzen, wobei in einem der drei Zeitschlitze den Pilotbitfolgen der Antennen $A_1$, $A_2$, $A_3$, in einem anderen die der Antennen $A_1$, $A_2$, $A_4$ und in einem dritten nur die der Antennen $A_1$, $A_2$ gesendet werden.

Der Gewichtungsfaktor $w_1$ der Antenne $A_1$ ist bei diesem Ausführungsbeispiel eine reelle Konstante, z.B. $1/\sqrt{n}=1/2$, wenn $n=4$ die Zahl der Antennen ist. Für diesen Gewichtungsfaktor braucht keine Rückkopplungsinformation übertragen zu werden. Im Zeitschlitz 0, in dem das globale Pilotsignal Pilotbitfolgen CPICH1, CPICH2, CPICH3 der Antennen $A_1$, $A_2$, $A_3$ enthält, ermittelt die Teilnehmerstation MS Kanalschätzungen $h_1$, $h_2$, $h_3$ für diese drei Pilotbitfolgen und bestimmt daraus den Gewichtungsfaktor $w_3$, der den Ausdruck

$$\left| \sum_i w_i h_i \right|^2$$

unter der Randbedingung einer konstanten Sendeleistung des Nutzdatenkanals DPCH maximiert. Dieser Gewichtungsfaktor $w_3$ wird zu Beginn des nachfolgenden Zeitschlitzes 1 an die Basisstation BS übertragen und für die Strahlformung des Nutzdatenkanals DPCH in diesem Zeitschlitz genutzt.

In Zeitschlitz 1 enthält das globale Pilotsignal die Pilotbitfolgen CPICH1, CPICH2, CPICH4 der Antennen $A_1$, $A_2$, $A_4$ Hier wird in analoger Weise der Wert des Gewichtungsfaktors $w_4$ aktualisiert, an die Basisstation BS übertragen und der neue Wert von $w_4$ für die Strahlformung im Zeitschlitz 2 genutzt. Im Zeitschlitz 2, in dem das globale Pilotsignal nur die Pilotbitfolgen CPICH1, CPICH2 enthält, wird ein aktualisierter Gewichtungsfaktor $w_2$ ermittelt, der anschließend übertragen wird.

**Ausführungsbeispiel 4**

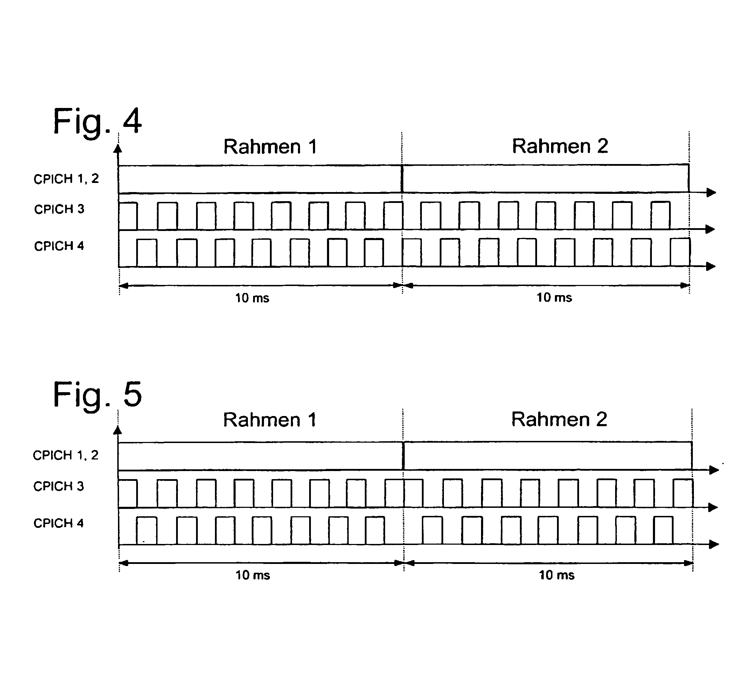

Die Zuordnung der einzelnen Pilotbitfolgen CPICH1 bis CPICH4 zu der ersten bzw. zweiten Gruppe ist in der nachfolgenden Tabelle 4 bzw. der Fig. 4 gezeigt. CPICH1 und CPICH2 gehören ständig der ersten Gruppe an, CPICH3 und CPICH4 jeweils abwechselnd. Die erste Gruppe enthält somit ständig drei Elemente. Wenn der Gewichtungsfaktor $w_1$ konstant gehalten wird, ergibt sich die in der Tabelle gezeigte Reihenfolge der Aktualisierungen der einzelnen Gewichtungsfaktoren.

Tabelle 4

| Slot | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Feedback zu | $\underline{w}_2$ | $\underline{w}_3$ | $\underline{w}_4$ | $\underline{w}_2$ | $\underline{w}_4$ | $\underline{w}_3$ | $\underline{w}_2$ | $\underline{w}_3$ | $\underline{w}_4$ | $\underline{w}_2$ | $\underline{w}_4$ | $\underline{w}_3$ | $\underline{w}_2$ | $\underline{w}_3$ | $\underline{w}_4$ |
| CPICH1 | X | X | X | X | X | X | X | X | X | X | X | X | X | X | X |
| CPICH2 | X | X | X | X | X | X | X | X | X | X | X | X | X | X | X |
| CPICH3 | X |  | X |  | X |  | X |  | X |  | X |  | X |  | X |
| CPICH4 |  | X |  | X |  | X |  | X |  | X |  | X |  | X |  |

Wie Fig. 4 zeigt, können die Pilotbitfolgen CPICH3 und CPICH4 streng von einem Zeitschlitz zum nächsten abwechselnd übertragen werden. In diesem Fall ergeben sich zwei unterschiedliche Rahmentypen, einer, in dessen erstem Zeitschlitz CPICH3 übertragen wird, und einer, in dessen erstem Zeitschlitz CPICH4 übertragen wird.

Es kann auch vorgesehen werden, dass sich die Zusammensetzung der Gruppen von Rahmen zu Rahmen exakt wiederholt; in einem solchen Fall, in Fig. 5 gezeigt, bleibt die Zusammensetzung der Gruppen jeweils am Übergang vom Zeitschlitz 14 eines Rahmens zum Zeitschlitz 0 des darauffolgenden unverändert.

**Ausführungsbeispiel 5**

Die Zuordnung der Pilotbitfolgen CPICH1 bis CPICH4, wie in Fig. 5 gezeigt, eignet sich auch für ein Verfahren, bei dem keiner der Gewichtungsfaktoren als konstant vorausgesetzt wird, sondern, wie bereits mit Bezug auf die Ausführungsbeispiele 1 und 2 angegeben, die übertragene Rückkopplungsinformation eine Amplitude und Phase des Gewichtungsfaktors jeder einzelnen Antenne im Bezug auf einen gemittelten Gewichtungsfaktor angibt und gemäß Formel (1) oder (2) berechnet wird. Eine mögliche Reihenfolge, in der dann auf die einzelnen Antennen bezogene Rückkopplungsinformation übertragen werden kann, ist in der nachfolgenden Tabelle 5 gezeigt. Auch hier ist die Übertragungsreihenfolge so festgelegt, dass die zu Beginn eines jeden Zeitschlitzes übertragene Rückkopplungsinformation auf eine in einem unmittelbar vorhergehenden Zeitschlitz durchgeführte Berechnung des Gewichtungsfaktors zurückgeht.

Tabelle 5

| Slot | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Feedback zu | $\underline{w}_2$ | $\underline{w}_3$ | $\underline{w}_4$ | $\underline{w}_1$ | $\underline{w}_2$ | $\underline{w}_3$ | $\underline{w}_4$ | $\underline{w}_1$ | $\underline{w}_2$ | $\underline{w}_3$ | $\underline{w}_4$ | $\underline{w}_1$ | $\underline{w}_2$ | $\underline{w}_3$ | $\underline{w}_4$ |
| CPICH1 | X | X | X | X | X | X | X | X | X | X | X | X | X | X | X |
| CPICH2 | X | X | X | X | X | X | X | X | X | X | X | X | X | X | X |
| CPICH3 | X |  | X |  | X |  | X |  | X |  | X |  | X |  | X |
| CPICH4 |  | X |  | X |  | X |  | X |  | X |  | X |  | X |  |

Während sich in den Formeln (1) und (2) die Summation über alle Pilotbitfolgen CPICHi erstreckt, die von der Folge CPICHj verschieden sind, für die jeweils der neue Gewichtungsfaktor $w_j$ berechnet wird, kann nach einer Abwandlung dieses Ausführungsbeispiels die Summation auch auf nur diejenigen Pilotbitfolgen CPICHi beschränkt werden, die während des Zeitschlitzes, in dem der Gewichtungsfaktor $w_j$ bestimmt wird, im globalen Pilotsignal enthalten und von CPICHj verschieden sind. Dadurch kann erreicht werden, dass alle Variablen, die in die Berechnung des Gewichtungsfaktors $w_j$ eingehen, auf im gleichen Zeitschlitz durchgeführte Messungen zurückgehen, also die größtmögliche Aktualität besitzen. Es ergibt sich dann für den aktualisierten Gewichtungsfaktor jeweils folgender Ausdruck:

$$ w_j = h_j^{\cdot} \cdot \frac{\sum\limits_{\substack{i \neq j \\ i \in Gruppe\,1}} w_i h_i}{(\#(Gruppe\,1) - 1)\left| h_j \right|^2} , \qquad (3) $$

wobei #(Gruppe1) die Zahl der Antennen der ersten Gruppe bezeichnet, bzw. in dem Fall, dass nur die Phasen der Gewichtungsfaktoren variiert werden,

$$ e^{j\phi_j} = K' h_j^{\cdot} \sum\limits_{\substack{i \neq j \\ i \in Gruppe\,1}} e^{j\phi_i} h_i , \qquad (4) $$

wobei K' ein unter Berücksichtigung der gegenüber Formel (2) verminderten Zahl von Summanden angepasster Normierungsfaktor ist.

**Ausführungsbeispiel 6**

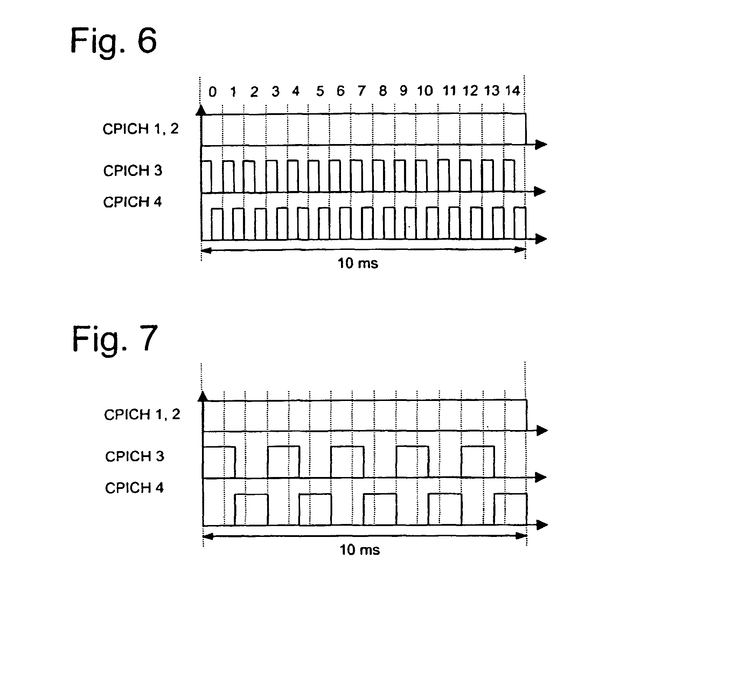

Fig. 6 zeigt ein sechstes Beispiel für den zeitlichen Verlauf der Zusammensetzung des globalen Pilotsignals CPICH im Verlaufe eines Rahmens mit fünfzehn Zeitschlitzen, die mit 0 bis 14 numeriert sind. Die Pilotbitfolgen CPICH1, CPICH2 werden fortlaufend ausgestrahlt, die Pilotbitfolgen CPICH3, CPICH4 werden jeweils abwechselnd über die Dauer eines halben Zeitschlitzes ausgestrahlt. D.h. die Zusammensetzung der ersten und der zweiten Gruppe wird zweimal pro Zeitschlitz bzw. m=30 Mal pro Rahmen geändert.

Dies ermöglicht es einer Teilnehmerstation MS, in jedem Zeitschlitz eine aktuelle Kanalschätzung $h_i$ für sämtliche Pilotbitfolgen CPICHi zu gewinnen und so einen Gewichtungsfaktor $w_j$, der als Rückkopplungsinformation an die Basisstation BS geliefert werden soll, jeweils anhand der Kanalschätzungen $h_i$ zu gewinnen, von denen keine älter ist als ein Zeitschlitz. Da die Verteilung der Pilotbitfolgen in jedem Zeitschlitz die gleiche ist, könnte in jedem Zeitschlitz Rückkopplungsinformation für jeden beliebigen Gewichtungsfaktor gewonnen und an die Basisstation übertragen werden. Wenn der Gewichtungsfaktor $w_1$ als konstant angenommen wird, können somit in jedem Rahmen fünf Zyklen von drei Zeitschlitzen ablaufen, in denen jeweils zu den drei anderen Gewichtungsfaktoren $w_2$, $w_3$, $w_4$ je einmal Rückkopplungsinformation übertragen wird.

**Ausführungsbeispiel 7**

Ein siebtes Beispiel für einen zeitlichen Verlauf der Zusammensetzung des globalen Pilotsignals ist in Fig. 7 gezeigt. Auch hier werden die Pilotbitfolgen CPICH1, CPICH2 der Antennen $A_1$, $A_2$ ständig und die Pilotbitfolgen CPICH3, CPICH4 der Antennen $A_3$, $A_4$ abwechselnd übertragen. Allerdings wird die Zusammensetzung der ersten und zweiten Gruppe nur m=10 Mal pro Rahmen geändert, so dass die Zusammensetzung des globalen Pilotsignals jeweils über 1,5 Zeitschlitze unverändert bleibt. Im Zeitschlitz 0 empfängt die Teilnehmerstation MS die Pilotbitfolgen CPICH1, CPICH2, CPICH3 und kann Kanalschätzungen für diese erzeugen. Aus diesen berechnet sie einen neuen Gewichtungsfaktor $w_3$ für die Antenne $A_3$, und überträgt im Zeitschlitz 1 auf diesen Gewichtungsfaktor $w_3$ bezogene Rückkopplungsinformation an die Basisstation BS.

Im Laufe des Zeitschlitzes 1 ändert sich die Zusammensetzung des globalen Pilotsignals; anhand von in diesem Zeitschlitz gewonnenen Kanalschätzungen berechnet die Teilnehmerstation einen neuen Gewichtungsfaktor $w_2$ für die Antenne $A_2$ und überträgt darauf bezogene Rückkopplungsinformation im nachfolgenden Zeitschlitz 2.

Im Zeitschlitz 2 enthält das globale Pilotsignal die Pilotbitfolgen CPICH1, CPICH2, CPICH4, so dass Kanalschätzungen für $A_1$, $A_2$, $A_4$ gewonnen werden können. Daraus abgeleitete Rückkopplungsinformation für den Gewichtungsfaktor $w_4$ wird im Zeitschlitz 3 an die Basisstation übertragen. Dieser Ablauf wiederholt sich 5 Mal pro Rahmen, wie in der nachfolgenden Tabelle 5 zusammengefasst.

Tabelle 6

| Slot | 0 | 1 | 2 | 3 | 4 | 5 | 6 | 7 | 8 | 9 | 10 | 11 | 12 | 13 | 14 |
|------|---|---|---|---|---|---|---|---|---|---|----|----|----|----|----|
| Feedback zu | $\underline{w}_4$ | $\underline{w}_3$ | $\underline{w}_2$ | $\underline{w}_4$ | $\underline{w}_3$ | $\underline{w}_2$ | $\underline{w}_4$ | $\underline{w}_3$ | $\underline{w}_2$ | $\underline{w}_4$ | $\underline{w}_3$ | $\underline{w}_2$ | $\underline{w}_4$ | $\underline{w}_3$ | $\underline{w}_2$ |
| CPICH1 | X | X | X | X | X | X | X | X | X | X | X | X | X | X | X |
| CPICH2 | X | X | X | X | X | X | X | X | X | X | X | X | X | X | X |
| CPICH3 | X | ½ | | X | ½ | | X | ½ | | X | ½ | | X | ½ | |
| CPICH4 | | ½ | X | | ½ | X | | ½ | X | | ½ | X | | ½ | X |

Da die Zusammensetzung des globalen Pilotsignals bei diesem Ausführungsbeispiel über relativ lange Zeitspannen von mehr als einem Zeitschlitz unverändert bleibt, wird angenommen, dass Kanalschätzungen auch für $A_3$, $A_4$ mit guter Genauigkeit möglich sein werden.

**Ausführungsbeispiel 8**

Im UMTS-System ist vorgesehen, dass die Basisstation BS in der Lage ist, einen Zeitversatz $\tau_{DPCH}$ zwischen Nutzdatenkanal DPCH und der jeweils durch den Verlauf des globalen Pilotsignals CPICH für die Teilnehmerstationen erkennbaren Rahmengrenze festzulegen. Herkömmlicherweise kann dieser Zeitversatz $\tau_{DPCH}$ Werte von 0 bis 149 Symbollängen annehmen, wobei ein Wert von 0 keinem Zeitversatz zwischen Netz-Datenkanal und Rahmengrenze entspricht und ein Wert von 150 einem Zeitversatz von einer kompletten Rahmenlänge entsprechen würde. Der erste Zeitschlitz des Nutzdatenkanals DPCH kann daher im Downlink und im Uplink einen praktisch beliebigen Zeitversatz im Bezug auf den Beginn des entsprechenden Rahmens des globalen Pilotsignals CPICH haben.

In jedem Uplink-Zeitschlitz erwartet die Basisstation BS Rückkopplungsinformation zu einem bestimmten Gewichtungsfaktor. Im folgenden wird als Beispiel angenommen, dass die erwartete Reihenfolge der Rückkopplungsinformation der obigen Tabelle 4 entspricht, es liegt jedoch auf der Hand, dass auch eine Reihenfolge gemäß einer beliebigen anderen Tabelle oder eine noch andere Reihenfolge zugrundegelegt werden könnte. Um die Rückkopplungsinformation jeweils rechtzeitig zur Verfügung stellen zu können, muss die Teilnehmerstation MS bei der Platzierung der Rückkopplungsinformation im Uplink-Rahmen des Nutzdatenkanals DPCH den Zeitversatz $\tau_{DPCH}$ berücksichtigen. Es liegt auf der Hand, dass ein gewisser Mindest-Zeitversatz von einigen Symbolen erforderlich ist, damit die Teilnehmerstation MS in der Lage ist, aus dem in einem Downlink-Zeitschlitz übertragenen globalen Pilotsignal eine Kanalschätzung zu erzeugen und Rückkopplungsinformation abzuleiten. Diese Rückkopplungsinformation muss an einer festgelegten zeitlichen Position eines Uplink-Zeitschlitzes, z.B. als neuntes von 10 Bits, übertragen werden, um von der Basisstation als solche erkannt zu werden. Der Zeitversatz wird daher zweckmäßigerweise so gewählt, dass an die Basisstation BS übertragene Rückkopplungsinformation dort mit möglichst geringer Verzögerung für die Strahlformung des nächsten Downlink-Zeitschlitzes eingesetzt werden kann. Um dies zu gewährleisten, wird die Auswahl der möglichen Zeitversätze $\tau_{DPCH}$ auf Werte der Form p=10k+9+d eingeschränkt, wobei k die Werte 0 bis 14 annehmen kann und d die Zeitdauer, gemessen in Symbolen, angibt, die die Teilnehmerstation MS benötigt, um nach dem Ende der Messung die Rückkopplungsinformation zu berechnen.

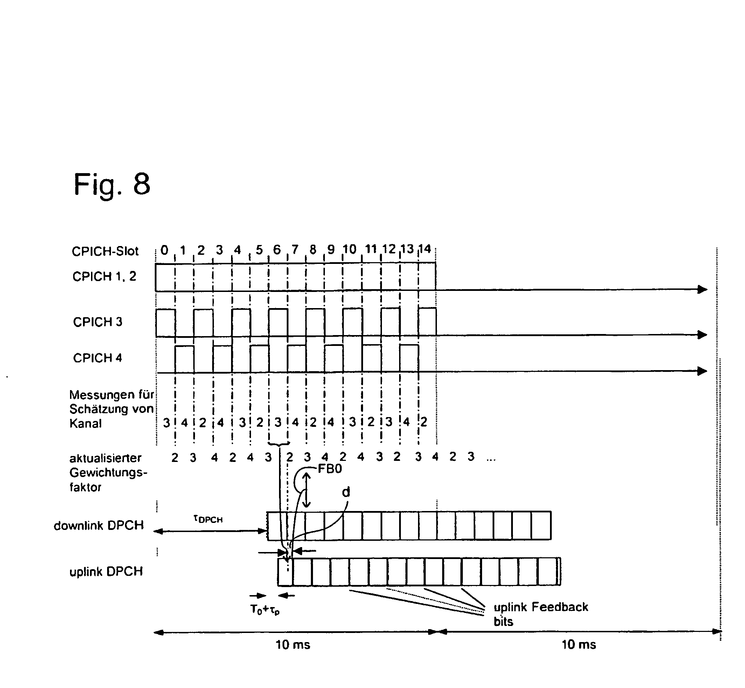

Dies soll anhand des Zeitdiagramms von Fig. 8 veranschaulicht werden. Die Zeilen CPICH1,2, CPICH3 und CPICH4 zeigen die Zusammensetzung des globalen Pilotsignals CPICH im Laufe eines Rahmens, entsprechend der Tabelle 4 bzw. den ersten Rahmen von Figs 4 und 5.

Beispielsweise im CPICH-Zeitschlitz 7 erwartet die Basisstation BS von allen von ihr versorgten Teilnehmerstationen Rückkopplungsinformation zur Aktualisierung des Gewichtungsfaktors $w_3$, um sie für die Strahlformung ab Beginn von Zeitschlitz 8 des CPICH-Kanals zu berücksichtigen. Die Nummer des Zeitschlitzes des Uplink-DPCH-Rahmens, in dem eine Teilnehmerstation diese Rückkopplungsinformation sendet, hängt vom Wert k des Zeitversatzes ab, der der Teilnehmerstation MS zugeordnet ist. Die Fig. zeigt die zeitliche Lage von Uplink- und Downlink-DPCH-Rahmen für den Fall k=5. In diesem Fall muss die Teilnehmerstation MS Rückkopplungsinformation FB0 zur Aktualisierung von $w_3$ im Zeitschlitz 0 ihres Uplink-DPCH-Rahmens senden, damit sie - unter Berücksichtigung der Signallaufzeit $\tau_p$ zwischen den Stationen - rechtzeitig an der Basisstation BS ankommt. D. h. die Teilnehmerstation MS nimmt die dafür erforderlichen Messungen über die gesamte Dauer des CPICH-Zeitschlitzes 6 hinweg vor, und führt in der Zeitspanne d zwischen dem Ende der Messungen und dem Sendezeitpunkt von FB0 die Berechnung von FB0 aus den Messergebnissen durch. Wie man leicht aus Fig. 8 erkennen kann, muss die Teilnehmerstation in den nachfolgenden Uplink-Zeitschlitzen ihres DPCH-Rahmens der Reihe nach Rückkopplungsinformationen für $w_4$, $w_2$, $w_4$, $w_3$, $w_2$, $w_3$ usw. liefern (siehe auch Tab. 7 unter k=5).

Im in Fig. 8 nicht dargestellten Fall, dass k=0 ist, ist der Downlink-Zeitschlitz 0 des DPCH-Rahmens um p=9+d Symbole gegen den Zeitschlitz 0 des CPICH verzögert. Ist d=1, so beträgt die Verzögerung genau einen Zeitschlitz (da ein Zeitschlitz im UMTS-System 10 Symbole enthält). Wie man in Analogie zum oben betrachteten Fall k=5 aus Fig. 8 ablesen kann, führt in diesem Fall die Mobilstation MS im Downlink-DPCH-Zeitschlitz 0 (zeitgleich mit CPICH-Zeitschlitz 1) Messungen aus, aus denen sie anschließend eine Kanalschätzung für $h_1$, $h_2$ und $h_4$ gewinnt und daraus die Rückkopplungsinformation für $w_4$ berechnet. Im Uplink-DPCH-Zeitschlitz 0 überträgt sie die Rückkopplungsinformation an die Basisstation BS, und diese berücksichtigt sie zum Senden des Downlink-DPCH-Zeitschlitzes 2 (zeitgleich mit CPICH-Zeitschlitz 3). Pro Zeitschlitz kann wie oben erwähnt nur die Rückkopplungsinformation von einem Gewichtungsfaktor $w_i$ übertragen werden.

Tabelle 7 zeigt für alle Werte von k, in welchem Uplink-DPCH-Zeitschlitz für welchen der Gewichtungsfaktoren $w_2$ bis $w_4$ Rückkopplungsinformation an die Basisstation übertragen wird, wenn wie in Fig. 5 gezeigt sich die Zusammensetzung der ersten und zweiten Gruppe in jedem Rahmen identisch wiederholt. Es ergeben sich insgesamt fünfzehn verschiedene Reihenfolgen für die Übertragung der Rückkopplungsinformation, die jeweils durch Verschieben um ein Element auseinander hervorgehen.

Tabelle 7

| slot | 0 | 1 | 2 | 3 | 4 | 5 | 6 | 7 | 8 | 9 | 10 | 11 | 12 | 13 | 14 |
|------|---|---|---|---|---|---|---|---|---|---|----|----|----|----|----|
| k=0 | $w_4$ | $w_2$ | $w_4$ | $w_3$ | $w_2$ | $w_3$ | $w_4$ | $w_2$ | $w_4$ | $w_3$ | $w_2$ | $w_3$ | $w_4$ | $w_2$ | $\mathbf{w_3}$ |
| k=1 | $w_2$ | $w_4$ | $w_3$ | $w_2$ | $w_3$ | $w_4$ | $w_2$ | $w_4$ | $w_3$ | $w_2$ | $w_3$ | $w_4$ | $w_2$ | $\mathbf{w_3}$ | $w_4$ |
| k=2 | $w_4$ | $w_3$ | $w_2$ | $w_3$ | $w_4$ | $w_2$ | $w_4$ | $w_3$ | $w_2$ | $w_3$ | $w_4$ | $w_2$ | $\mathbf{w_3}$ | $w_4$ | $w_2$ |
| k=3 | $w_3$ | $w_2$ | $w_3$ | $w_4$ | $w_2$ | $w_4$ | $w_3$ | $w_2$ | $w_3$ | $w_4$ | $w_2$ | $\mathbf{w_3}$ | $w_4$ | $w_2$ | $w_4$ |
| k=4 | $w_2$ | $w_3$ | $w_4$ | $w_2$ | $w_4$ | $w_3$ | $w_2$ | $w_3$ | $w_4$ | $w_2$ | $\mathbf{w_3}$ | $w_4$ | $w_2$ | $w_4$ | $w_3$ |
| k=5 | $w_3$ | $w_4$ | $w_2$ | $w_4$ | $w_3$ | $w_2$ | $w_3$ | $w_4$ | $w_2$ | $\mathbf{w_3}$ | $w_4$ | $w_2$ | $w_4$ | $w_3$ | $w_2$ |
| k=6 | $w_4$ | $w_2$ | $w_4$ | $w_3$ | $w_2$ | $w_3$ | $w_4$ | $w_2$ | $\mathbf{w_3}$ | $w_4$ | $w_2$ | $w_4$ | $w_3$ | $w_2$ | $w_3$ |
| k=7 | $w_2$ | $w_4$ | $w_3$ | $w_2$ | $w_3$ | $w_4$ | $w_2$ | $\mathbf{w_3}$ | $w_4$ | $w_2$ | $w_4$ | $w_3$ | $w_2$ | $w_3$ | $w_4$ |
| k=8 | $w_4$ | $w_3$ | $w_2$ | $w_3$ | $w_4$ | $w_2$ | $\mathbf{w_3}$ | $w_4$ | $w_2$ | $w_4$ | $w_3$ | $w_2$ | $w_3$ | $w_4$ | $w_2$ |
| k=9 | $w_3$ | $w_2$ | $w_3$ | $w_4$ | $w_2$ | $\mathbf{w_3}$ | $w_4$ | $w_2$ | $w_4$ | $w_3$ | $w_2$ | $w_3$ | $w_4$ | $w_2$ | $w_4$ |
| k=10 | $w_2$ | $w_3$ | $w_4$ | $w_2$ | $\mathbf{w_3}$ | $w_4$ | $w_2$ | $w_4$ | $w_3$ | $w_2$ | $w_3$ | $w_4$ | $w_2$ | $w_4$ | $w_3$ |
| k=11 | $w_3$ | $w_4$ | $w_2$ | $\mathbf{w_3}$ | $w_4$ | $w_2$ | $w_4$ | $w_3$ | $w_2$ | $w_3$ | $w_4$ | $w_2$ | $w_4$ | $w_3$ | $w_2$ |
| k=12 | $w_4$ | $w_2$ | $\mathbf{w_3}$ | $w_4$ | $w_2$ | $w_4$ | $w_3$ | $w_2$ | $w_3$ | $w_4$ | $w_2$ | $w_4$ | $w_3$ | $w_2$ | $w_3$ |
| k=13 | $w_2$ | $\mathbf{w_3}$ | $w_4$ | $w_2$ | $w_4$ | $w_3$ | $w_2$ | $w_3$ | $w_4$ | $w_2$ | $w_4$ | $w_3$ | $w_2$ | $w_3$ | $w_4$ |
| k=14 | $\mathbf{w_3}$ | $w_4$ | $w_2$ | $w_4$ | $w_3$ | $w_2$ | $w_3$ | $w_4$ | $w_2$ | $w_4$ | $w_3$ | $w_2$ | $w_3$ | $w_4$ | $w_2$ |

Dabei ist für jeden Wert von k diejenige Rückkopplungsinformation (in diesem Beispiel $w_3$), die auf einer

Kanalschätzung im ersten Zeitschlitz eines CPICH-Rahmens beruht, durch Fettdruck hervorgehoben.

Wenn die Zusammensetzung der zwei Gruppen sich, wie in Fig. 4 gezeigt, von einem Rahmen zum darauffolgenden ändert und nur jeweils von einem Rahmen zum übernächsten wiederholt, ergibt sich folgende Verteilung der Rückkopplungsinformationen in Abhängigkeit vom Zeitversatzwert k:

Tabelle 8

| Ungeradzahlige Rahmen | | | | | | | | | | | | | | | |
|---|---|---|---|---|---|---|---|---|---|---|---|---|---|---|---|
| slot | 0 | 1 | 2 | 3 | 4 | 5 | 6 | 7 | 8 | 9 | 10 | 11 | 12 | 13 | 14 |
| k=0 | $w_3$ | $w_2$ | $w_3$ | $w_4$ | $w_2$ | $w_4$ | $w_3$ | $w_2$ | $w_3$ | $w_4$ | $w_2$ | $w_4$ | $w_3$ | $w_2$ | $\mathbf{w_3}$ |
| k=1 | $w_2$ | $w_3$ | $w_4$ | $w_2$ | $w_4$ | $w_3$ | $w_2$ | $w_3$ | $w_4$ | $w_2$ | $w_4$ | $w_3$ | $w_2$ | $\mathbf{w_3}$ | $w_4$ |
| k=2 | $w_3$ | $w_4$ | $w_2$ | $w_4$ | $w_3$ | $w_2$ | $w_3$ | $w_4$ | $w_2$ | $w_4$ | $w_3$ | $w_2$ | $\mathbf{w_3}$ | $w_4$ | $w_2$ |
| k=3 | $w_4$ | $w_2$ | $w_4$ | $w_3$ | $w_2$ | $w_3$ | $w_4$ | $w_2$ | $w_4$ | $w_3$ | $w_2$ | $\mathbf{w_3}$ | $w_4$ | $w_2$ | $w_4$ |
| k=4 | $w_2$ | $w_4$ | $w_3$ | $w_2$ | $w_3$ | $w_4$ | $w_2$ | $w_4$ | $w_3$ | $w_2$ | $\mathbf{w_3}$ | $w_4$ | $w_2$ | $w_4$ | $w_3$ |
| k=5 | $w_4$ | $w_3$ | $w_2$ | $w_3$ | $w_4$ | $w_2$ | $w_4$ | $w_3$ | $w_2$ | $\mathbf{w_3}$ | $w_4$ | $w_2$ | $w_4$ | $w_3$ | $w_2$ |
| k=6 | $w_3$ | $w_2$ | $w_3$ | $w_4$ | $w_2$ | $w_4$ | $w_3$ | $w_2$ | $\mathbf{w_3}$ | $w_4$ | $w_2$ | $w_4$ | $w_3$ | $w_2$ | $w_3$ |
| k=7 | $w_2$ | $w_3$ | $w_4$ | $w_2$ | $w_4$ | $w_3$ | $w_2$ | $\mathbf{w_3}$ | $w_4$ | $w_2$ | $w_4$ | $w_3$ | $w_2$ | $w_3$ | $w_4$ |
| k=8 | $w_3$ | $w_4$ | $w_2$ | $w_4$ | $w_3$ | $w_2$ | $\mathbf{w_3}$ | $w_4$ | $w_2$ | $w_4$ | $w_3$ | $w_2$ | $w_3$ | $w_4$ | $w_2$ |
| k=9 | $w_4$ | $w_2$ | $w_4$ | $w_3$ | $w_2$ | $\mathbf{w_3}$ | $w_4$ | $w_2$ | $w_4$ | $w_3$ | $w_2$ | $w_3$ | $w_4$ | $w_2$ | $w_4$ |
| k=10 | $w_2$ | $w_4$ | $w_3$ | $w_2$ | $\mathbf{w_3}$ | $w_4$ | $w_2$ | $w_4$ | $w_3$ | $w_2$ | $w_3$ | $w_4$ | $w_2$ | $w_4$ | $w_3$ |
| k=11 | $w_4$ | $w_3$ | $w_2$ | $\mathbf{w_3}$ | $w_4$ | $w_2$ | $w_4$ | $w_3$ | $w_2$ | $w_3$ | $w_4$ | $w_2$ | $w_4$ | $w_3$ | $w_2$ |
| k=12 | $w_3$ | $w_2$ | $\mathbf{w_3}$ | $w_4$ | $w_2$ | $w_4$ | $w_3$ | $w_2$ | $w_3$ | $w_4$ | $w_2$ | $w_4$ | $w_3$ | $w_2$ | $w_3$ |
| k=13 | $w_2$ | $\mathbf{w_3}$ | $w_4$ | $w_2$ | $w_4$ | $w_3$ | $w_2$ | $w_3$ | $w_4$ | $w_2$ | $w_4$ | $w_3$ | $w_2$ | $w_3$ | $w_4$ |
| k=14 | $\mathbf{w_3}$ | $w_4$ | $w_2$ | $w_4$ | $w_3$ | $w_2$ | $w_3$ | $w_4$ | $w_2$ | $w_4$ | $w_3$ | $w_2$ | $w_3$ | $w_4$ | $w_2$ |
| Geradzahlige Rahmen | | | | | | | | | | | | | | | |
| k=0 | $w_4$ | $w_2$ | $w_4$ | $w_3$ | $w_2$ | $w_3$ | $w_4$ | $w_2$ | $w_4$ | $w_3$ | $w_2$ | $w_3$ | $w_4$ | $w_2$ | $\mathbf{w_4}$ |
| k=1 | $w_2$ | $w_4$ | $w_3$ | $w_2$ | $w_3$ | $w_4$ | $w_2$ | $w_4$ | $w_3$ | $w_2$ | $w_3$ | $w_4$ | $w_2$ | $\mathbf{w_4}$ | $w_3$ |
| k=2 | $w_4$ | $w_3$ | $w_2$ | $w_3$ | $w_4$ | $w_2$ | $w_4$ | $w_3$ | $w_2$ | $w_3$ | $w_4$ | $w_2$ | $\mathbf{w_4}$ | $w_3$ | $w_2$ |
| k=3 | $w_3$ | $w_2$ | $w_3$ | $w_4$ | $w_2$ | $w_4$ | $w_3$ | $w_2$ | $w_3$ | $w_4$ | $w_2$ | $\mathbf{w_4}$ | $w_3$ | $w_2$ | $w_3$ |
| k=4 | $w_2$ | $w_3$ | $w_4$ | $w_2$ | $w_4$ | $w_3$ | $w_2$ | $w_3$ | $w_4$ | $w_2$ | $\mathbf{w_4}$ | $w_3$ | $w_2$ | $w_3$ | $w_4$ |
| k=5 | $w_3$ | $w_4$ | $w_2$ | $w_4$ | $w_3$ | $w_2$ | $w_3$ | $w_4$ | $w_2$ | $\mathbf{w_4}$ | $w_3$ | $w_2$ | $w_3$ | $w_4$ | $w_2$ |
| k=6 | $w_4$ | $w_2$ | $w_4$ | $w_3$ | $w_2$ | $w_3$ | $w_4$ | $w_2$ | $\mathbf{w_4}$ | $w_3$ | $w_2$ | $w_3$ | $w_4$ | $w_2$ | $w_4$ |
| k=7 | $w_2$ | $w_4$ | $w_3$ | $w_2$ | $w_3$ | $w_4$ | $w_2$ | $\mathbf{w_4}$ | $w_3$ | $w_2$ | $w_3$ | $w_4$ | $w_2$ | $w_4$ | $w_3$ |
| k=8 | $w_4$ | $w_3$ | $w_2$ | $w_3$ | $w_4$ | $w_2$ | $\mathbf{w_4}$ | $w_3$ | $w_2$ | $w_3$ | $w_4$ | $w_2$ | $w_4$ | $w_3$ | $w_2$ |
| k=9 | $w_3$ | $w_2$ | $w_3$ | $w_4$ | $w_2$ | $\mathbf{w_4}$ | $w_3$ | $w_2$ | $w_3$ | $w_4$ | $w_2$ | $w_4$ | $w_3$ | $w_2$ | $w_3$ |
| k=10 | $w_2$ | $w_3$ | $w_4$ | $w_2$ | $\mathbf{w_4}$ | $w_3$ | $w_2$ | $w_3$ | $w_4$ | $w_2$ | $w_4$ | $w_3$ | $w_2$ | $w_3$ | $w_4$ |
| k=11 | $w_3$ | $w_4$ | $w_2$ | $\mathbf{w_4}$ | $w_3$ | $w_2$ | $w_3$ | $w_4$ | $w_2$ | $w_4$ | $w_3$ | $w_2$ | $w_3$ | $w_4$ | $w_2$ |
| k=12 | $w_4$ | $w_2$ | $\mathbf{w_4}$ | $w_3$ | $w_2$ | $w_3$ | $w_4$ | $w_2$ | $w_4$ | $w_3$ | $w_2$ | $w_3$ | $w_4$ | $w_2$ | $w_4$ |
| k=13 | $w_2$ | $\mathbf{w_4}$ | $w_3$ | $w_2$ | $w_3$ | $w_4$ | $w_2$ | $w_4$ | $w_3$ | $w_2$ | $w_3$ | $w_4$ | $w_2$ | $w_4$ | $w_3$ |
| k=14 | $\mathbf{w_4}$ | $w_3$ | $w_2$ | $w_3$ | $w_4$ | $w_2$ | $w_4$ | $w_3$ | $w_2$ | $w_3$ | $w_4$ | $w_2$ | $w_4$ | $w_3$ | $w_2$ |

In diesem Fall gibt es insgesamt 6 verschiedene Reihenfolgen der Rückkopplungsinformation, die sich über 2 Rahmen erstrecken, und die die Teilnehmerstation erzeugen können muss. Eine dieser 6 möglichen Reihenfolgen ist in Tab. 8 durch Kursivsatz hervorgehoben.

**Ausführungsbeispiel 9**

Alternativ zum Beispiel 8 kann auch vorgesehen werden, dass die Teilnehmerstationen unabhängig von dem ihnen von der Basisstation BS zugewiesenen Zeitversatz $\tau_{DPCH}$ die Rückkopplungsinformation mit einer festen Reihenfolge liefern, z.B gemäß einer der Tabellen 1 bis 6. In diesem Fall ist es die Aufgabe der Basisstation BS, für jede von einer Teilnehmerstation gelieferte Rückkopplungsinformation anhand der Nummer des Uplink-Zeitschlitzes, in dem sie empfangen wird, und der besagten festen Reihenfolge zu entscheiden, zu welchem Gewichtungsfaktor die Rückkopplungsinformation gehört und diesen entsprechend zu aktualisieren.

**Ausführungsbeispiel 10**

Im Rahmen des Handovers treten beim UMTS-System Situationen auf, in denen eine Teilnehmerstation MS mit einer Mehrzahl von Basisstationen gleichzeitig kommuniziert und von diesen ein globales Pilotsignal CPICH empfängt. Das DPCH-Rahmenformat lässt in jedem Zeitschlitz nur die Übertragung von Rückkopplungsinformation für eine Antenne zu, die von allen Basisstationen empfangen und ausgewertet wird. Die globalen Pilotsignale der Basisstationen sind deshalb insoweit zu synchronisieren, dass sie aus Sicht der Teilnehmerstation MS jederzeit Beiträge der gleichen Antennen enthalten. Die Verzögerungswerte k bzw. $\tau_{DPCH}$, die einer Teilnehmerstation bei zwei verschiedenen Basisstationen zugeordnet sind, sind so gewählt, dass die DPCH Signale an der Teilnehmerstation MS zur selben Zeit eintreffen.

D.h. im Falle der Ausführungsbeispiels 3 und 7 sind zwischen den einzelnen Pilotsignalen CPICH der Basisstationen Zeitversätze von q-mal 3 Zeitschlitzen zulässig, wobei q=0, 1, 2 etc sein kann. Beim Beispiel 6 kann der Zeitversatz q-mal 1 Zeitschlitz betragen, bei den Beispielen 4, 5, 8, 9 jeweils q-mal 15 oder q-mal 30 Zeitschlitze.

Unter Verwendung der Pilotbitfolgen einer gleichen Antenne $A_1$, $A_2$, $A_3$ oder $A_4$ verschiedener Basisstationen, die die Teilnehmerstation MS empfangen kann, ermittelt sie jeweils die Kanalschätzungen und sendet eine aus diesen Kanalschätzungen berechnete Rückkopplungsinformation, die von an allen Basisstationen empfangen und ausgewertet wird.

**Patentansprüche**

1. Verfahren zum Übertragen eines globalen Pilotsignals von einer Basisstation eines Funk-Kommunikationssystems an eine Teilnehmerstation, wobei die Basisstation eine Mehrzahl von Antennen aufweist, denen jeweils eine für sie charakteristische Pilotbitfolge zugeordnet ist, bei dem das globale Pilotsignal durch Überlagern der von mehreren Antennen der Basisstation ausgestrahlten Pilotbitfolgen gebildet wird, **gekennzeichnet durch** die Schritte

   a) Aufteilen der mehreren Antennen in eine erste Gruppe und eine zweite Gruppe mit jeweils wenigstens einer Antenne,
   b) Senden der Pilotbitfolgen der Antennen nur der ersten Gruppe,
   c) Ändern der Zusammensetzungen der ersten und der zweiten Gruppe und Zurückkehren zu Schritt b).

2. Verfahren nach Anspruch 1, **dadurch gekennzeichnet, dass** die Zusammensetzungen der Gruppen zyklisch wiederholt werden.

3. Verfahren nach Anspruch 1 oder 2, **dadurch gekennzeichnet, dass** zwei Antennen ständig der ersten Gruppe angehören.

4. Verfahren nach Anspruch 3, **dadurch gekennzeichnet, dass** eine dritte und eine vierte Antenne jeweils alternierend der ersten bzw. der zweiten Gruppe angehören.

5. Verfahren nach einem der Ansprüche 1 bis 3, **dadurch gekennzeichnet, dass** von einer dritten und einer vierten Antenne abwechselnd beide der zweiten Gruppe, die dritte der ersten und die vierte der zweiten Gruppe oder die dritte der zweiten und die vierte der ersten Gruppe angehören.

6. Verfahren nach Anspruch 2, **dadurch gekennzeichnet, dass** in jedem Zyklus jede Antenne wenigstens einmal der zweiten Gruppe angehört.

7. Verfahren nach einem der vorhergehenden Ansprüche, **dadurch gekennzeichnet, dass** das Sendesignal der Basisstation, von dem das globale Pilotsignal ein Teil ist, in Rahmen von jeweils mehreren Zeitschlitzen unterteilt ist.

**8.** Verfahren nach Anspruch 7, **dadurch gekennzeichnet, dass** der Schritt c) jeweils an einer Grenze zwischen zwei Zeitschlitzen, vorzugsweise an jeder Grenze zwischen zwei Zeitschlitzen ausgeführt wird.

**9.** Verfahren nach Anspruch 2 und Anspruch 7, **dadurch gekennzeichnet, dass** der Zyklus, in dem die Zusammensetzungen wiederholt werden, ein Rahmen ist.

**10.** Verfahren nach Anspruch 9, **dadurch gekennzeichnet, dass** das Sendesignal ein Codemultiplexsignal ist, dass das globale Pilotsignal zeitkontinuierlich ausgestrahlt wird, und dass der Schritt c) in gleichen Zeitabständen wiederholt wird, deren Dauer das M/m-fache der Dauer des Rahmens ist, wobei m eine natürliche Zahl, vorzugsweise 2M, M oder 2M/3, und M die Zahl der Zeitschlitze eines Rahmens, vorzugsweise 15, ist.

**11.** Verfahren zum Steuern der Strahlformung eines von einer Basisstation eines Mobilfunk-Kommunikationssystems an eine Teilnehmerstation gesendeten Signals, bei dem die Basisstation einen für die Strahlformung verwendeten Gewichtungsfaktor für jede Antenne anhand von der Teilnehmerstation gelieferter Rückkopplungsinformation festlegt, **dadurch gekennzeichnet, dass** die Basisstation ein globales Pilotsignal an die Teilnehmerstation mit einem Verfahren nach einem der vorhergehenden Ansprüche überträgt, und dass folgende Schritte periodisch wiederholt werden:

d) Durchführen wenigstens einer Kanalschätzung für jeweils wenigstens eine aktuell in dem globalen Pilotsignal enthaltene Pilotbitfolge durch die Teilnehmerstation,
e) Ableiten von auf die so abgeschätzte Pilotbitfolge bezogener Rückkopplungsinformation von der (oder den) Kanalschätzung(en) und Übertragen der Rückkopplungsinformation an die Basisstation
f) Aktualisieren eines der abgeschätzten Pilotbitfolge zugeordneten Gewichtungsfaktors anhand der Rückkopplungsinformation.

**12.** Verfahren nach Anspruch 11, **dadurch gekennzeichnet, dass** die Schritte e) und f) jeweils in einem festen Zeitabstand durchgeführt werden, und dass in jedem Schritt f) jeweils derjenige Gewichtungsfaktor aktualisiert wird, zu dem im unmittelbar zuvor durchgeführten Schritt e) Rückkopplungsinformation übertragen worden ist.

**13.** Verfahren nach Anspruch 11 oder 12, **dadurch gekennzeichnet, dass** der einer ersten Antenne der Basisstation zugeordnete Gewichtungsfaktor als ein konstanter Referenzfaktor angenommen wird und dass die Rückkopplungsinformation jeweils wenigstens eine von der Phasenlage der geschätzten Pilotbitfolge in Bezug zum Referenzfaktor abhängige Phaseninformation umfasst.

**14.** Verfahren nach Anspruch 13, **dadurch gekennzeichnet, dass** das Ableiten und Übertragen von Rückkopplungsinformation für eine andere als die erste Antenne vorgenommen wird.

**15.** Verfahren nach Anspruch 11 oder 12, dass ein gleitender Mittelwert der Gewichtungsfaktoren als Referenzfaktor berechnet wird, und dass die Rückkopplungsinformation jeweils wenigstens eine von der Phasenlage der geschätzten Pilotbitfolge in Bezug zum Referenzfaktor abhängige Phaseninformation umfasst.

**16.** Verfahren nach Anspruch 15, **dadurch gekennzeichnet, dass** die Kanalschätzungen an den Pilotbitfolgen aller Antennen vorgenommen werden.

**17.** Verfahren nach Anspruch 15 oder 16, **dadurch gekennzeichnet, dass** zum Berechnen des gleitenden Mittelwerts für die Pilotbitfolge der j-ten Antenne eine Summe der Form

$$\sum_i w_i h_i$$

gebildet wird, wobei $w_i$ ein Gewichtungsfaktor und $h_i$ eine Kanalschätzung der Pilotbitfolge der i-ten Antenne sind und $i \neq j$ ist.

**18.** Verfahren nach Anspruch 17, **dadurch gekennzeichnet, dass** die Summe über alle Antennen der Basisstation mit Ausnahme der j-ten gebildet wird.

**19.** Verfahren nach Anspruch 17, **dadurch gekennzeichnet, dass** die Summe über alle Antennen der ersten Gruppe mit Ausnahme der j-ten gebildet wird.

**20.** Verfahren nach einem der Ansprüche 15 bis 19, **dadurch gekennzeichnet, dass** die Rückkopplungsinformation aus dem Gewichtsfaktor

$$w_j = K \cdot \frac{h_j'}{|h_j|^2} \cdot \Sigma \ w_i h_j$$

bestimmt wird, wobei $w_i$ ein Gewichtungsfaktor und $h_i$ eine Kanalschätzung der Pilotbitfolge der i-ten Antenne sind und K eine reelle Konstante ist.

**21.** Verfahren nach einem der Ansprüche 13 bis 20, **dadurch gekennzeichnet, dass** die Rückkopplungsinformation eine von der Empfangsfeldstärke der geschätzten Pilotbitfolge abhängige Feldstärkeinformation umfasst.

**22.** Verfahren nach einem der vorhergehenden Ansprüche, **dadurch gekennzeichnet, dass** die Teilnehmerstation mit zwei oder mehr Basisstationen gleichzeitig kommuniziert und die Zusammensetzungen der zwei Gruppen an den jeweiligen Basisstationen jederzeit gleich festgelegt werden.

**23.** Verfahren nach Anspruch 22, **dadurch gekennzeichnet, dass** die Zusammensetzung der ersten und der zweiten Gruppe sich mit einer Periode t nach jeweils einer ganzen Zahl 1 von Änderungen zyklisch wiederholt, und dass die Rahmen des globalen Pilotsignals der jeweiligen Basisstationen einen Zeitversatz zueinander aufweisen, der ein q-faches der Periode t ist, mit q=0,1,2,... .

**24.** Basisstation für ein Mobilfunk-Kommunikationssystem, mit einer Mehrzahl von Antennen, die jeweils vorgesehen sind, um eine für sie charakteristische Pilotbitfolge auszustrahlen, **dadurch gekennzeichnet, dass** die Basisstation eingerichtet ist, zu einer gegebenen Zeit die Pilotbitfolgen einer wenigstens eine Antenne umfassenden ersten Gruppe von Antennen aus der Mehrzahl auszustrahlen und die Pilotbitfolgen von einer wenigstens eine Antenne umfassenden zweiten Gruppe von Antennen aus der Mehrzahl nicht auszustrahlen, und zu späteren Zeitpunkten die Zusammensetzungen der ersten und der zweiten Gruppe zu ändern und die Pilotbitfolgen dann gemäß dieser geänderten Gruppeneinteilung auszustrahlen.

**25.** Basisstation nach Anspruch 24, **dadurch gekennzeichnet, dass** sie die Zusammensetzung der Gruppen periodisch verändert.

**Claims**

**1.** Method for the transmission of a global pilot signal from a base station of a radio communication system to a user station, with the base station having a plurality of antennas, to each of which a characteristic pilot bit sequence is assigned, with the global pilot signal being generated by overlaying the pilot bit sequences emitted by several antennas of the base station, **characterised by** the following steps.

   a) Dividing the plurality of antennas into a first group and a second group, each with at least one antenna.

   b) Transmitting the pilot bit sequences of the antennas of only the first group.

   c) Changing the compositions of the first and second group and returning to step b).

**2.** Method in accordance with claim 1, **characterised in that** the compositions of the groups are cyclically repeated.

**3.** Method in accordance with claim 1 or 2, **characterised in that** two antennas permanently belong to the first group.

**4.** Method in accordance with claim 3, **characterised in that** a third and a fourth antenna each belong alternately to the first or second group.

**5.** Method in accordance with one of claims 1 to 3, **characterised in that** of a third and fourth antenna both belong alternately to the second group, the third to the first and the fourth to the second group or the third to the second and the fourth to the first group.

6.  Method in accordance with claim 2, **characterised in that** in each cycle each antenna belongs at least once to the second group.

7.  Method in accordance with one of the preceding claims, **characterised in that** the transmitted signal of the base station, of which the global pilot signal is a part, is divided into frames, each consisting of several time slots.

8.  Method in accordance with claim 7, **characterised in that** step c) is carried out in each case at a boundary between two time slots, preferably at each boundary between two time slots.

9.  Method in accordance with claim 2 and claim 7, **characterised in that** the cycle in which the compositions are repeated is one frame.

10. Method in accordance with claim 9, **characterised in that** the transmitted signal is a code-division multiplex signal, that the global pilot signal is emitted continuously, and that step c) is repeated in equal time intervals the duration of which is M/m-times the duration of the frame, with m being a natural number, preferably 2M, M or 2M/3 and M is the number of time slots in a frame, preferably 15.

11. Method for controlling the beam shaping of a signal transmitted from a base station of a mobile radio communication system to a user station, with the base station specifying a weighting factor used for beam shaping, for each antenna using the feedback information supplied from the user station, **characterised in that** the base station transmits a global pilot signal to the user station using a method in accordance with one of the preceding claims, and that the following steps are repeated periodically.

    d) Performance by the user station of at least one channel estimation for at least one pilot bit sequence currently contained in the global pilot signal,

    e) Derivation of the feedback information relative to the pilot bit sequence thus estimated from the channel estimation(s) and transmission of the feedback information to the base station.

    f) Updating of one weighting factor assigned to the estimated pilot bit sequence using feedback information.

12. Method in accordance with claim 11, **characterised in that** steps e) and f) are each carried out at a fixed time interval and that in each step f) the particular weighting factor for which feedback information has been transmitted in the step e) performed immediately before is updated.

13. Method in accordance with claim 11 or 12, **characterised in that** the weighting factor assigned to a first antenna of the base station is assumed to be a constant reference factor and that the feedback information in each case includes at least one piece of phase information relating to the phase position of the estimated pilot bit sequence relative to the reference factor.

14. Method in accordance with claim 13, **characterised in that** the derivation and transmission of feedback information is carried out for an antenna other than the first antenna.

15. Method in accordance with claim 11 or 12, **characterised in that** a sliding average value of the weighting factor is calculated as a reference factor and that the feedback information contains at least one piece of phase information relating to the phase position of the estimated pilot bit sequence with respect to the reference factor.

16. Method in accordance with claim 15, **characterised in that** the channel estimations are carried on the pilot bit sequences of all antennas.

17. Method in accordance with claim 15 or 16, **characterised in that** to calculate the sliding average value for the pilot bit sequence of the jth antenna a sum in the form

$$\sum_i \mathtt{w_i h_i}$$

is generated, with $w_i$ being a weighting factor and $h_i$ a channel estimation of the pilot bit sequence of the i-th antenna and $i \neq j$.

18. Method in accordance with claim 17, **characterised in that** the sum is formed using all antennas of the base station with the exception of the jth.

19. Method in accordance with claim 17, **characterised in that** the sum is formed using all antennas of the first group with the exception of the jth.

20. Method in accordance with one of claims 15 to 19, **characterised in that** the feedback information is determined from the weighting factor

$$w_j = K \cdot \frac{h_j^{'}}{|h_j|^2} \cdot \Sigma \ w_i h_j$$

with $w_i$ being a weighting factor and $h_i$ a channel estimation of the pilot bit sequence of the i-th antenna and K a real constant.

21. Method in accordance with one of claims 13 to 20, **characterised in that** the feedback information includes field strength information relative to the reception field strength of the estimated pilot bit sequence.

22. Method in accordance with one of the preceding claims, **characterised in that** the user station communicates simultaneously with two or more base stations and the compositions of the two groups at the particular base stations are always specified the same.

23. Method in accordance with claim 22, **characterised in that** the composition of the first and second groups repeats cyclically with a period t in each case after a whole number 1 of changes and that the frames of the global pilot signal of the particular base stations have a time displacement relative to each other that is a q times the period t, with q being equal to 0, 1, 2, ....

24. Base station for a mobile radio communication system with a plurality of antennas that are provided to emit a characteristic pilot bit sequence, **characterised in that** the base station is set up to emit, at a given time, the pilot bit sequences of a first group of antennas from the plurality, containing at least one antenna, and not to emit the pilot bit sequences of a second group of antennas from the plurality, containing at least one antenna, and to change, at a later date, the compositions of the first and second groups and to emit the pilot bit sequence according to this changed group subdivision.

25. Base station in accordance with claim 22, **characterised in that** the composition of the groups changes periodically.

**Revendications**

1. Procédé pour transmettre un signal pilote global d'une station de base d'un système de radiocommunication à une station d'abonné, la station de base présentant une pluralité d'antennes auxquelles une séquence de bits pilotes, qui leur est caractéristique, est respectivement affectée, dans lequel le signal pilote global est formé par superposition des séquences de bits pilotes émises par plusieurs antennes de la station de base, **caractérisé par** les étapes

   a) répartition des plusieurs antennes en un premier groupe et un deuxième groupe ayant respectivement au moins une antenne,
   b) émission des séquences de bits pilotes des antennes de seulement le premier groupe,
   c) modification des compositions des premier et deuxième groupes et retour à l'étape b).

**2.** Procédé selon la revendication 1, **caractérisé en ce que** les compositions des groupes sont répétées cycliquement.

**3.** Procédé selon la revendication 1 ou 2, **caractérisé en ce que** deux antennes appartiennent en permanence au premier groupe.

**4.** Procédé selon la revendication 3, **caractérisé en ce qu'**une troisième et une quatrième antennes appartiennent respectivement en alternance au premier resp. au deuxième groupe.

**5.** Procédé selon l'une quelconque des revendications 1 à 3, **caractérisé en ce que** d'une troisième et d'une quatrième antennes, en alternance, les deux appartiennent au deuxième groupe, la troisième appartient au premier groupe et la quatrième appartient au deuxième groupe ou la troisième au deuxième groupe et la quatrième au premier groupe.

**6.** Procédé selon la revendication 2, **caractérisé en ce que** dans chaque cycle, chaque antenne appartient au moins une fois au deuxième groupe.

**7.** Procédé selon l'une quelconque des revendications précédentes, **caractérisé en ce que** le signal d'émission de la station de base, dont le signal pilote global fait partie, est divisé en trames de respectivement plusieurs créneaux temporels.

**8.** Procédé selon la revendication 7, **caractérisé en ce que** l'étape c) est respectivement exécuté à une limite entre deux créneaux temporels, de préférence à chaque limite entre deux créneaux temporels.

**9.** Procédé selon la revendication 2 et la revendication 7, **caractérisé en ce que** le cycle, dans lequel les compositions sont répétées, est une trame.

**10.** Procédé selon la revendication 9, **caractérisé en ce que** le signal d'émission est un signal multiplex à répartition en code, **en ce que** le signal pilote global est émis continuellement dans le temps et **en ce que** l'étape c) est répétée à intervalles de temps identiques, dont la durée est de M/m fois la durée de la trame, m étant un nombre naturel, de préférence 2M, M ou 2M/3, et M étant le nombre de créneaux temporels d'une trame, de préférence 15.

**11.** Procédé pour commander la formation du faisceau d'un signal émis à une station d'abonné par une station de base d'un système de radiocommunication mobile, dans lequel la station de base définit pour chaque antenne un facteur de pondération utilisé pour la formation du faisceau, à l'aide d'une information en retour fournie par la station d'abonné, **caractérisé en ce que**
la station de base transmet un signal pilote global à la station d'abonné au moyen d'un procédé selon l'une quelconque des revendications précédentes, et **en ce que** les étapes suivantes sont répétées périodiquement :

  d) exécution, par la station d'abonné, d'au moins une évaluation de canal pour respectivement au moins une séquence de bits pilotes contenue actuellement dans le signal pilote global,
  e) déduction, à partir de (des) l'évaluation(s) de canal, d'une information en retour relative à la séquence de bits pilotes ainsi évaluée, et transmission à la station de base de l'information en retour,
  f) actualisation, à l'aide de l'information en retour, d'un facteur de pondération affecté à la séquence de bits pilotes évaluée.

**12.** Procédé selon la revendication 11, **caractérisé en ce que** les étapes e) et f) sont respectivement exécutées dans un intervalle de temps fixe, et **en ce qu'**à chaque étape f) le facteur de pondération, auquel une information en retour a été transmise à l'étape e) réalisée directement avant, est respectivement actualisé.

**13.** Procédé selon la revendication 11 ou 12, **caractérisé en ce que** le facteur de pondération affecté à une première antenne de la station de base est supposé être un facteur de référence constant et **en ce que** l'information en retour comprend respectivement au moins une information de phase dépendant de la position de phase de la séquence de bits pilotes évaluée par rapport au facteur de référence.

**14.** Procédé selon la revendication 13, **caractérisé en ce que** la déduction et la transmission de l'information en retour sont exécutées pour une autre antenne que la première.

# EP 1 417 779 B1

**15.** Procédé selon la revendication 11 ou 12, **caractérisé en ce qu'**une valeur moyenne mobile des facteurs de pondération est calculée comme facteur de référence et **en ce que** l'information en retour comprend respectivement au moins une information de phase dépendant de la position de phase de la séquence de bits pilotes évaluée par rapport au facteur de référence.

**16.** Procédé selon la revendication 15, **caractérisé en ce que** les évaluations de canal sont exécutées sur les séquences de bits pilotes de toutes les antennes.

**17.** Procédé selon la revendication 15 ou 16, **caractérisé en ce que**, pour calculer la valeur moyenne mobile pour la séquence de bits pilotes de la j-ième antenne, une somme de la forme

$$\sum_i w_i h_i$$

est formée, $w_i$ étant un facteur de pondération et $h_i$ une évaluation de canal de la séquence de bits pilotes de la i-ième antenne et $i \neq j$.

**18.** Procédé selon la revendication 17, **caractérisé en ce que** la somme est formée sur toutes les antennes de la station de base, à l'exception de la j-ième.

**19.** Procédé selon la revendication 17, **caractérisé en ce que** la somme est formée sur toutes les antennes du premier groupe, à l'exception de la j-ième.

**20.** Procédé selon l'une quelconque des revendications 15 à 19, **caractérisé en ce que** l'information en retour est déterminée à partir du facteur de pondération

$$w_j = K \cdot \frac{h_j'}{|h_j|^2} \cdot \Sigma \; w_i h_j$$

$w_i$ étant un facteur de pondération et $h_i$ une évaluation de canal de la séquence de bits pilotes de la i-ième antenne et K étant une constante réelle.

**21.** Procédé selon l'une quelconque des revendications 13 à 20, **caractérisé en ce que** l'information en retour comprend une information d'intensité du champ dépendant de l'intensité du champ de réception de la séquence de bits pilotes évaluée.

**22.** Procédé selon l'une quelconque des revendications précédentes, **caractérisé en ce que** la station d'abonné communique simultanément avec deux stations de base ou plus et **en ce que** les compositions des deux groupes sont déterminées de manière identique à tout moment sur les stations de base respectives.

**23.** Procédé selon la revendication 22, **caractérisé en ce que** la composition du premier et du deuxième groupes se répète cycliquement avec une période t après respectivement un nombre entier 1 de modifications, et **en ce que** les trames du signal pilote global de la station de base respective présentent un décalage de temps les unes par rapport aux autres, qui est q fois supérieur à la période t, q étant égal à 0, 1, 2, ...

**24.** Station de base pour un système de radiocommunication mobile, comprenant une pluralité d'antennes qui sont respectivement prévues pour émettre une séquence de bits pilotes qui leur est caractéristique, **caractérisée en ce que** la station de base est configurée pour émettre, à un temps donné, les séquences de bits pilotes d'un premier groupe d'antennes, parmi la pluralité d'antennes, comprenant au moins une antenne et pour ne pas émettre les séquences de bits pilotes d'un deuxième groupe d'antennes, parmi la pluralité d'antennes, comprenant au moins une antenne, et pour modifier les compositions du premier et du deuxième groupes à des moments ultérieurs et pour émettre ensuite les séquences de bits pilotes selon cette division en groupes modifiée.

**25.** Station de base selon la revendication 24, **caractérisée en ce qu'**elle modifie la composition des groupes périodiquement.

## Fig. 1

MS1

V1

MS2

V2

MSk

Vk

$A_1$ $A_2$ $A_3$ $A_4$

BS

BS

BSC

MSC

PSTN

## Fig. 2

$w_1$

CPICH1

Nutzdaten, DPCH

M1

S1

$A_1$

$w_2$

CPICH2

M2

S2

$A_2$

$w_3$

CPICH3

M3

S3

$A_3$

$w_4$

CPICH4

M4

S4

$A_4$

# Fig. 3

# Fig. 3A

## Fig. 4

## Fig. 5

Fig. 6

10 ms

Fig. 7

10 ms

# Fig. 8